# EUROPEAN PATENT APPLICATION

(11) **EP 4 380 111 A1**
(43) Date of publication of application: **05.06.2024**
(21) Application number: 22848512.4
(22) Date of filing: 26.07.2022
(51) Int. Cl.: H04L 12/28, H04W 36/08, H04W 48/16

(54) **RADIO-FRAME SENDING METHOD AND APPARATUS, AND RADIO-FRAME RECEIVING METHOD AND APPARATUS**

(30) Priority: 27.07.2021 CN 202110852559
(71) Applicant: Huawei Technologies Co., Ltd., Shenzhen, Guangdong 518129 (CN)
(72) Inventor: HUANG, Guogang, Shenzhen, Guangdong 518129 (CN); GUO, Yuchen, Shenzhen, Guangdong 518129 (CN); LI, Yunbo, Shenzhen, Guangdong 518129 (CN); GAN, Ming, Shenzhen, Guangdong 518129 (CN); LI, Yiqing, Shenzhen, Guangdong 518129 (CN)
(74) Representative: Epping - Hermann - Fischer
(86) International application number: PCT/CN2022/107850
(87) International publication number: WO 2023/005907

(57) **Abstract**

A radio frame sending method and apparatus, and a radio frame receiving method and apparatus are provided, so that a receiver of a radio frame determines that channel information in information about a neighbor AP is invalid or is not notified, to prevent a legacy STAin the receiver of the radio frame from attempting, on a corresponding channel based on the channel information in the information about the neighbor AP, to probe and associate with the neighbor AP. The radio frame sending method includes: generating a radio frame, where the radio frame includes a first information element, the first information element includes a first field, the first information element is used to carry information about a neighbor AP, the first field indicates channel information in the information about the neighbor AP, and when a value of the first field is a first value, the first field indicates that the channel information in the information about the neighbor AP is invalid or is not notified; and sending the radio frame. This method is applied to a wireless local area network system supporting IEEE 802. 1 1ax next-generation Wi-Fi protocols, for example, 802.11 series protocols such as the 802.11be or the EHT.

## Description

This application claims priority to Chinese Patent Application No. 202110852559.7, filed with the China National Intellectual Property Administration on July 27, 2021 and entitled "RADIO FRAME SENDING METHOD AND APPARATUS, AND RADIO FRAME RECEIVING METHOD AND APPARATUS", which is incorporated herein by reference in its entirety.

### TECHNICAL FIELD

This application relates to the field of wireless local area network (wireless local area network, WLAN) technologies, and in particular, to a radio frame sending method and apparatus, and a radio frame receiving method and apparatus.

### BACKGROUND

In a WLAN communication process, if a station (station, STA) wants to associate and establish a connection with an access point (access point, AP), the station may discover existence of the AP through scanning. Generally, to prevent the STA from constantly scanning a channel to reduce scanning time of the STA, the AP may add a reduced neighbor report element (Reduced Neighbor Report element) in a management frame, to carry information about a neighbor AP of the AP. Therefore, a STA that receives the management frame can establish an association with the neighbor AP based on the information about the neighbor AP of the AP.

However, during actual application, not all neighbors necessarily support association with the STA. For example, when a neighbor is a soft AP (soft AP), to avoid impact on a device on a primary link, the neighbor may not support association with a STA on a non-primary link. For another example, when a neighbor is an AP on a link in a multi-link device, to reduce power consumption or achieve another purpose, the neighbor may need to be disabled (disabled) or removed (removed). As a result, the neighbor no longer supports association with a STA.

Therefore, how to prevent a STA from accessing a neighbor that does not support association with the STA is a technical problem to be urgently resolved.

### SUMMARY

Embodiments of this application provide a radio frame sending method and apparatus, and a radio frame receiving method and apparatus. When a transmitter of a radio frame determines that a neighbor is not used to associate with a receiver of the radio frame, a value of a first field in the radio frame is set to a first value, so that the receiver of the radio frame determines that channel information in information about a neighbor AP is invalid or is not notified, to prevent a legacy STA in the receiver of the radio frame from attempting, on a corresponding channel based on the channel information in the information about the neighbor AP, to probe and associate with the neighbor AP.

A first aspect of embodiments of this application provides a radio frame sending method, applied to WLAN communication. The method is performed by a WLAN device, or the method is performed by some components (such as a processor, a chip, or a chip system) in a WLAN device. In the method, the WLAN device first generates a radio frame, where the radio frame includes a first information element, and the first information element includes a first field. The first information element is used to carry information about a neighbor AP, the first field indicates channel information in the information about the neighbor AP, and when a value of the first field is a first value, the first field indicates that the channel information in the information about the neighbor AP is invalid or is not notified. Then, the WLAN device sends the radio frame.

It should be noted that, in this embodiment and subsequent embodiments, that when a value of the first field is a first value, the first field indicates that the channel information in the information about the neighbor AP is invalid or is not notified may alternatively be expressed as follows: When a value of the first field is a first value, the first field indicates that the channel information in the information about the neighbor AP is invalid, when a value of the first field is a first value, the first field indicates that the channel information in the information about the neighbor AP is not indicated, when a value of the first field is a first value, the first field indicates that the channel information in the information about the neighbor AP does not support association, when a value of the first field is a first value, the first field indicates that the channel information in the information about the neighbor AP does not support access, or the like.

Based on the foregoing technical solution, the radio frame sent by the WLAN device includes the first information element used to carry the information about the neighbor AP, and the first information element includes the first field indicating the channel information in the information about the neighbor AP. When the value of the first field is the first value, the first field indicates that the channel information in the information about the neighbor AP is invalid or is not notified.

Therefore, when a transmitter of the radio frame determines that a neighbor is not used to associate with a receiver of the radio frame, the value of the first field in the radio frame is set to the first value, so that the receiver of the radio frame determines that the channel information in the information about the neighbor AP is invalid or is not notified, to prevent a legacy STA in the receiver of the radio frame from attempting, on a corresponding channel based on the channel information in the information about the neighbor AP, to probe and associate with the neighbor AP. A second aspect of embodiments of this application provides a radio frame receiving method, applied to WLAN communication. The method is performed by a WLAN device, or the method is performed by some components (such as a processor, a chip, or a chip system) in a WLAN device. In the method, a radio frame is received, where the radio frame includes a first information element, and the first information element includes a first field. The first information element is used to carry information about a neighbor AP, and the first field indicates channel information in the information about the neighbor AP. Then, the WLAN device determines the channel information in the information about the neighbor AP based on the radio frame, where when a value of the first field is a first value, the first field indicates that the channel information in the information about the neighbor AP is not notified.

Based on the foregoing technical solution, the radio frame received by the WLAN device includes the first information element used to carry the information about the neighbor AP, and the first information element includes the first field indicating the channel information in the information about the neighbor AP. When the value of the first field is the first value, the first field indicates that the channel information in the information about the neighbor AP is not notified. Therefore, when a transmitter of the radio frame determines that a neighbor is not used to associate with a receiver of the radio frame, the value of the first field in the radio frame is set to the first value, so that the receiver of the radio frame determines that the channel information in the information about the neighbor AP is not notified, to prevent a legacy STA in the receiver of the radio frame from attempting, on a corresponding channel based on the channel information in the information about the neighbor AP, to probe and associate with the neighbor AP.

It should be noted that, when the radio frame receiving method is applied to a non-legacy station (non-legacy STA), the non-legacy STA determines, based on a manner in which the value of the first field in the radio frame is set to the first value, that the channel information in the information about the neighbor AP indicated by the radio frame is not notified. In addition, the non-legacy STA may further obtain the channel information in the information about the neighbor AP based on another message/information element/field, for example, a primary channel (Primary Channel) field in a high throughput operation element (HT Operation element). When the radio frame receiving method is applied to a legacy station (legacy STA), the legacy STA obtains, through interpretation, that the first value is a reserved value based on a manner in which the value of the first field in the radio frame is set to the first value. Therefore, the legacy STA determines that the channel information in the information about the neighbor AP indicated by the radio frame is invalid.

A third aspect of embodiments of this application provides a radio frame sending apparatus, applied to WLAN communication. The apparatus may be a WLAN device, or the apparatus may be some components (such as a processor, a chip, or a chip system) in a WLAN device. A processing unit in the apparatus is configured to generate a radio frame, where the radio frame includes a first information element, and the first information element includes a first field. The first information element is used to carry information about a neighbor AP, the first field indicates channel information in the information about the neighbor AP, and when a value of the first field is a first value, the first field indicates that the channel information in the information about the neighbor AP is invalid or is not notified. A transceiver unit in the apparatus is configured to send the radio frame.

Based on the foregoing technical solution, the radio frame sent by the transceiver unit includes the first information element used to carry the information about the neighbor AP, and the first information element includes the first field indicating the channel information in the information about the neighbor AP. When the value of the first field is the first value, the first field indicates that the channel information in the information about the neighbor AP is invalid or is not notified. Therefore, when a transmitter of the radio frame determines that a neighbor is not used to associate with a receiver of the radio frame, the value of the first field in the radio frame is set to the first value, so that the receiver of the radio frame determines that the channel information in the information about the neighbor AP is invalid or is not notified, to prevent a legacy STA in the receiver of the radio frame from attempting, on a corresponding channel based on the channel information in the information about the neighbor AP, to probe and associate with the neighbor. A fourth aspect of embodiments of this application provides a radio frame receiving apparatus, applied to WLAN communication. The apparatus may be executed by a WLAN device, or the apparatus may be executed by some components (such as a processor, a chip, or a chip system) in a WLAN device. A transceiver unit in the apparatus is configured to receive a radio frame, where the radio frame includes a first information element, and the first information element includes a first field. The first information element is used to carry information about a neighbor AP, and the first field indicates channel information in the information about the neighbor AP. A processing unit in the apparatus is configured to determine the channel information in the information about the neighbor AP based on the radio frame, where when a value of the first field is a first value, the first field indicates that the channel information in the information about the neighbor AP is invalid or is not notified.

Based on the foregoing technical solution, the radio frame received by the transceiver unit includes the first information element used to carry the information about the neighbor AP, and the first information element includes the first field indicating the channel information in the information about the neighbor AP. When the value of the first field is the first value, the first field indicates that the channel information in the information about the neighbor AP is invalid or is not notified. Therefore, when a transmitter of the radio frame determines that a neighbor is not used to associate with a receiver of the radio frame, the value of the first field in the radio frame is set to the first value, so that the receiver of the radio frame determines that the channel information in the information about the neighbor AP is invalid or is not notified, to prevent a legacy STA in the receiver of the radio frame from attempting, on a corresponding channel based on the channel information in the information about the neighbor AP, to probe and associate with the neighbor. In a possible implementation of any one of the first aspect to the fourth aspect of embodiments of this application, the first field indicates a channel number corresponding to the channel information. Based on the foregoing technical solution, in the radio frame, the first field indicating the channel information in the information about the neighbor AP may specifically indicate the channel number corresponding to the channel information, so that the receiver of the radio frame determines that the channel number corresponding to the channel information in the information about the neighbor AP is invalid or is not notified, to prevent the legacy STA in the receiver of the radio frame from attempting, on the corresponding channel based on the channel number corresponding to the channel information in the information about the neighbor AP, to probe and associate with the neighbor.

In a possible implementation of any one of the first aspect to the fourth aspect of embodiments of this application, the first field includes a channel number (Channel Number) field.

In a possible implementation of any one of the first aspect to the fourth aspect of embodiments of this application, the first field indicates an operating class to which the channel information belongs.

Based on the foregoing technical solution, in the radio frame, the first field indicating the channel information in the information about the neighbor AP may specifically indicate the operating class to which the channel information belongs, so that the receiver of the radio frame determines that the operating class to which the channel information in the information about the neighbor AP belongs is invalid or is not notified, to prevent the legacy STA in the receiver of the radio frame from attempting, on the corresponding channel based on the operating class to which the channel information in the information about the neighbor AP belongs, to probe and associate with the neighbor.

In a possible implementation of any one of the first aspect to the fourth aspect of embodiments of this application, the first field includes an operating class Operating Class field.

In a possible implementation of any one of the first aspect to the fourth aspect of embodiments of this application, when the value of the first field is the first value, the first field further indicates to remove the neighbor AP; or when the value of the first field is the first value, the first field further indicates to disable the neighbor AP.

Based on the foregoing technical solution, when the neighbor is an AP on a link in a multi-link device, to reduce power consumption or achieve another purpose, the neighbor may need to be disabled (disabled) or removed (removed). As a result, the neighbor no longer supports association with a STA. Therefore, in the radio frame, when the value of the first field indicating the channel information in the information about the neighbor AP is the first value, in addition to indicating that the channel information in the information about the neighbor AP is invalid or is not notified, the first filed further indicates status information of the neighbor, for example, indicates that the neighbor is (about to be) removed or indicates that the neighbor AP is (about to be) disabled. Therefore, the receiver of the radio frame determines that the neighbor is a non-associative neighbor.

In a possible implementation of any one of the first aspect to the fourth aspect of embodiments of this application, the radio frame further includes a target field. When a value of the target field is a second value, the target field indicates to remove the neighbor AP; or when a value of the target field is a second value, the target field indicates to disable the neighbor AP.

Based on the foregoing technical solution, when the neighbor is an AP on a link in a multi-link device, to reduce power consumption or achieve another purpose, the neighbor AP may need to be disabled (disabled) or removed (removed). As a result, the neighbor no longer supports association with a STA. Therefore, the radio frame further includes the target field, and when the value of the target field is the second value, the target field indicates status information of the neighbor, for example, indicates that the neighbor is (about to be) removed or indicates that the neighbor AP is (about to be) disabled. Therefore, the receiver of the radio frame determines that the neighbor is a non-associative neighbor.

Optionally, the target field includes at least one of the following: a reserved (Reserved) field in a target beacon transmission time information header (target beacon transmission time information header, TBTT info Header) field, a target beacon transmission time information field type (target beacon transmission time information field type, TBTT info Field Type) field, or the like. Optionally, when the target field includes the reserved (Reserved) field in the TBTT info header field, the first value is 0 or 1. When the target field includes the TBTT info field type field, the first value is 1, 2, or 3.

In a possible implementation of any one of the first aspect to the fourth aspect of embodiments of this application, the first information element indicates information about a neighbor AP corresponding to a non-primary link of a soft AP MLD (soft AP MLD).

In a possible implementation of any one of the first aspect to the fourth aspect of embodiments of this application, the first information element further includes a second field, and the second field includes a first subfield and a second subfield. The second field indicates a basic service set parameter corresponding to a neighbor. In addition, the first subfield included in the second field indicates whether the basic service set expects to exchange a medium access control protocol data unit (medium access control protocol data unit, MAC PDU, MPDU for short) of a management type with the neighbor through an on-channel tunneling (on-channel tunneling, OCT) mechanism, and when the first field indicates that the channel information in the information about the neighbor AP is invalid or is not notified, the first subfield indicates that the basic service set expects to exchange the medium access control protocol data unit MPDU of the management type with the neighbor through the OCT mechanism. In addition, the second subfield included in the second field indicates whether the neighbor enables unsolicited probe response, and when the first field indicates that the channel information in the information about the neighbor AP is invalid or is not notified, the second subfield indicates the neighbor not to enable the unsolicited probe response. Based on the foregoing technical solution, when the neighbor is the neighbor AP corresponding to the non-primary link of the soft AP MLD (soft AP MLD), in the radio frame, the first information element used to carry the information about the neighbor AP further includes the second field indicating the basic service set parameter corresponding to the neighbor. The second field further includes the first subfield and the second subfield. In addition, when the first field indicates that the channel information in the information about the neighbor AP is invalid or is not notified, the first subfield indicates that the basic service set expects to exchange the MPDU of the management type with the neighbor through the OCT mechanism, and the second subfield indicates the neighbor not to enable the unsolicited probe response. Therefore, the first subfield and the second subfield in the second field are set, to further prevent the receiver of the radio frame from associating with the neighbor based on the basic service set parameter corresponding to the neighbor.

In a possible implementation of any one of the first aspect to the fourth aspect of embodiments of this application, the second field is a basic service set parameter (basic service set parameter, BSS Parameter) field, the first subfield is an on-channel tunneling recommended (OCT recommended) field, and the second subfield is an unsolicited probe response active (Unsolicited Probe Response Active) subfield.

In a possible implementation of any one of the first aspect to the fourth aspect of embodiments of this application, the first information element further includes a third field, the third field indicates offset information of beacon frame sending time of the basic service set corresponding to the neighbor, and when the first field indicates that the channel information in the information about the neighbor AP is invalid or is not notified, the third field indicates that the offset information of the beacon frame sending time of the basic service set corresponding to the neighbor is unknown information.

Based on the foregoing technical solution, when the neighbor is the neighbor AP corresponding to the non-primary link of the soft AP MLD (soft AP MLD), in the radio frame, the first information element used to carry the information about the neighbor AP further includes the third field indicating the offset information of the beacon frame sending time of the basic service set corresponding to the neighbor. In addition, when the first field indicates that the channel information in the information about the neighbor AP is invalid or is not notified, the third field indicates that the offset information of the beacon frame sending time of the basic service set corresponding to the neighbor is the unknown information. Therefore, the third field is set, to further prevent the receiver of the radio frame from associating with the neighbor based on the offset information.

In a possible implementation of any one of the first aspect to the fourth aspect of embodiments of this application, the first information element is a reduced neighbor report element (Reduced Neighbor Report element).

In a possible implementation of any one of the first aspect to the fourth aspect of embodiments of this application, the radio frame is a management frame.

Optionally, the radio frame includes one or more of a beacon (Beacon) frame, a probe request (Probe Request) frame, a probe response (Probe Response) frame, an association request (Association Request) frame, a reassociation request (Reassociation Request) frame, a disassociation (Disassociation) frame, a deauthentication (Deauthentication) frame, an authentication (Authentication) frame, and the like.

A fifth aspect of embodiments of this application provides a radio frame sending method, applied to WLAN communication. The method is performed by a WLAN device, or the method is performed by some components (such as a processor, a chip, or a chip system) in a WLAN device. In the method, the WLAN device first generates a radio frame, where the radio frame includes a first information element, and the first information element includes a target field. The first information element is used to carry information about a neighbor AP, and when a value of the target field is a first value, the target field indicates to remove or disable the neighbor AP. Then, the WLAN device sends the radio frame.

Based on the foregoing technical solution, the radio frame sent by the WLAN device includes the first information element used to carry the information about the neighbor AP, and the first information element includes the target field. When the value of the target field is the first value, the target field indicates to remove or disable the neighbor AP. Therefore, when a transmitter of the radio frame determines that a neighbor is not used to associate with a receiver of the radio frame, the value of the target field in the radio frame is set to the first value, so that the receiver of the radio frame determines that the neighbor AP is (about to be) removed or (about to be) disabled, to prevent the receiver of the radio frame from attempting, based on channel information in the information about the neighbor AP, to associate with the neighbor.

A sixth aspect of embodiments of this application provides a radio frame receiving method, applied to WLAN communication. The method is performed by a WLAN device, or the method is performed by some components (such as a processor, a chip, or a chip system) in a WLAN device. In the method, the WLAN device receives a radio frame, where the radio frame includes a first information element, and the first information element includes a target field. The first information element is used to carry information about a neighbor AP. Then, the WLAN device determines channel information in the information about the neighbor AP based on the radio frame, where when a value of the target field is a first value, the target field indicates to remove or disable the neighbor AP.

Based on the foregoing technical solution, the radio frame received by the WLAN device includes the first information element used to carry the information about the neighbor AP, and the first information element includes the target field. When the value of the target field is the first value, the target field indicates to remove or disable the neighbor AP. Therefore, when a transmitter of the radio frame determines that a neighbor is not used to associate with a receiver of the radio frame, the value of the target field in the radio frame is set to the first value, so that the receiver of the radio frame determines that the neighbor AP is (about to be) removed or (about to be) disabled, to prevent the receiver of the radio frame from attempting, based on the channel information in the information about the neighbor AP, to associate with the neighbor.

It should be noted that, when the radio frame receiving method is applied to a non-legacy STA (non-legacy STA), the non-legacy STA determines, based on a manner in which the value of the target field in the radio frame is set to the first value, that the neighbor AP is (about to be) removed or (about to be) disabled. When the radio frame receiving method is applied to a legacy station (legacy STA), the legacy STA obtains, through interpretation, that the first value is a reserved value based on a manner in which the value of the target field in the radio frame is set to the first value. Therefore, the legacy STA determines that the target field is an invalid field.

A seventh aspect of embodiments of this application provides a radio frame sending apparatus, applied to WLAN communication. The apparatus is a WLAN device, or the apparatus is some components (such as a processor, a chip, or a chip system) in a WLAN device. The apparatus includes a processing unit and a transceiver unit. First, the processing unit generates a radio frame, where the radio frame includes a first information element, and the first information element includes a target field. The first information element is used to carry information about a neighbor AP, and when a value of the target field is a first value, the target field indicates to remove or disable the neighbor AP. Then, the transceiver unit sends the radio frame.

Based on the foregoing technical solution, the radio frame sent by the transceiver unit includes the first information element used to carry the information about the neighbor AP, and the first information element includes the target field. When the value of the target field is the first value, the target field indicates to remove or disable the neighbor AP. Therefore, when a transmitter of the radio frame determines that a neighbor is not used to associate with a receiver of the radio frame, the value of the target field in the radio frame is set to the first value, so that the receiver of the radio frame determines that the neighbor AP is (about to be) removed or (about to be) disabled, to prevent the receiver of the radio frame from attempting, based on channel information in the information about the neighbor AP, to associate with the neighbor.

An eighth aspect of embodiments of this application provides a radio frame receiving apparatus, applied to WLAN communication. The apparatus is a WLAN device, or the apparatus is some components (such as a processor, a chip, or a chip system) in a WLAN device. The apparatus includes a processing unit and a transceiver unit. First, the transceiver unit receives a radio frame, where the radio frame includes a first information element, and the first information element includes a target field. The first information element is used to carry information about a neighbor AP. Then, the processing unit determines channel information in the information about the neighbor AP based on the radio frame, where when a value of the target field is a first value, the target field indicates to remove or disable the neighbor AP.

Based on the foregoing technical solution, the radio frame received by the transceiver unit includes the first information element used to carry the information about the neighbor AP, and the first information element includes the target field. When the value of the target field is the first value, the target field indicates to remove or disable the neighbor AP. Therefore, when a transmitter of the radio frame determines that a neighbor is not used to associate with a receiver of the radio frame, the value of the target field in the radio frame is set to the first value, so that the receiver of the radio frame determines that the neighbor AP is (about to be) removed or (about to be) disabled, to prevent the receiver of the radio frame from attempting, based on the channel information in the information about the neighbor AP, to associate with the neighbor.

In a possible implementation of any one of the fifth aspect to the eighth aspect of embodiments of this application, the target field includes at least one of the following:
a channel number (Channel Number) field;
an operating class (Operating Class) field;
a reserved (Reserved) field in a target beacon transmission time information header (target beacon transmission time information header, TBTT info Header) field; or
a target beacon transmission time information field type (target beacon transmission time information field type, TBTT info Field Type) field.

Based on the foregoing technical solution, the target field may be implemented in the foregoing manners. The first value is a reserved value of any one of the foregoing fields. Therefore, when the radio frame receiving method is applied to a non-legacy station (non-legacy STA), the non-legacy STA determines, based on a manner in which the value of the target field in the radio frame is set to the first value, that the neighbor AP is (about to be) removed or (about to be) disabled. When the radio frame receiving method is applied to a legacy station (legacy STA), the legacy STA obtains, through interpretation, that the first value is a reserved value based on a manner in which the value of the target field in the radio frame is set to the first value. Therefore, the legacy STA determines that the target field is an invalid field.

Optionally, when the target field includes the channel number (Channel Number) field, the first value is 0. When the target field includes the operating class (Operating Class) field, the first value is 0 or 255. When the target field includes the reserved (Reserved) field in the TBTT info header field, the first value is 0 or 1. When the target field includes the TBTT info field type field, the first value is 1, 2, or 3.

In a possible implementation of any one of the fifth aspect to the eighth aspect of embodiments of this application, the first information element further includes a second field, and the second field includes a first subfield and a second subfield. The second field indicates a basic service set parameter corresponding to a neighbor. In addition, the first subfield included in the second field indicates whether the basic service set expects to exchange a medium access control protocol data unit (medium access control protocol data unit, MAC PDU, MPDU for short) of a management type with the neighbor through an on-channel tunneling (on-channel tunneling, OCT) mechanism, and when the target field indicates to remove the neighbor AP or disable the neighbor AP, the first subfield indicates that the basic service set expects to exchange the medium access control protocol data unit MPDU of the management type with the neighbor through the OCT mechanism. In addition, the second subfield included in the second field indicates whether the neighbor enables unsolicited probe response, and when the target field indicates to remove the neighbor AP or disable the neighbor AP, the second subfield indicates the neighbor not to enable the unsolicited probe response.

Based on the foregoing technical solution, when the neighbor is the neighbor AP corresponding to the non-primary link of a soft AP MLD (soft AP MLD), in the radio frame, the first information element used to carry the information about the neighbor AP further includes the second field indicating the basic service set parameter corresponding to the neighbor. The second field further includes the first subfield and the second subfield. In addition, when the target field indicates to remove the neighbor AP or disable the neighbor AP, the first subfield indicates that the basic service set expects to exchange the MPDU of the management type with the neighbor through the OCT mechanism, and the second subfield indicates the neighbor not to enable the unsolicited probe response. Therefore, the first subfield and the second subfield in the second field are set, to further prevent the receiver of the radio frame from associating with the neighbor based on the basic service set parameter corresponding to the neighbor.

In a possible implementation of any one of the fifth aspect to the eighth aspect of embodiments of this application, the second field is a basic service set parameter (basic service set parameter, BSS Parameter) field, the first subfield is an on-channel tunneling recommended (OCT recommended) field, and the second subfield is an unsolicited probe response active (Unsolicited Probe Response Active) subfield.

In a possible implementation of any one of the fifth aspect to the eighth aspect of embodiments of this application, the first information element further includes a third field, and the third field indicates offset information of beacon frame sending time of the basic service set corresponding to the neighbor, and when the target field indicates to remove the neighbor AP or disable the neighbor AP, the third field indicates that the offset information of the beacon frame sending time of the basic service set corresponding to the neighbor is unknown information.

Based on the foregoing technical solution, in the radio frame, the first information element used to carry the information about the neighbor AP further includes the third field indicating the offset information of the beacon frame sending time of the basic service set corresponding to the neighbor. In addition, when the target field indicates to remove the neighbor AP or disable the neighbor AP, the third field indicates that the offset information of the beacon frame sending time of the basic service set corresponding to the neighbor is the unknown information. Therefore, the third field is set, to further prevent the receiver of the radio frame from associating with the neighbor based on the offset information.

In a possible implementation of any one of the fifth aspect to the eighth aspect of embodiments of this application, the first information element is a reduced neighbor report element (Reduced Neighbor Report element).

In a possible implementation of any one of the fifth aspect to the eighth aspect of embodiments of this application, the radio frame is a management frame.

Optionally, the radio frame includes one or more of a beacon (Beacon) frame, a probe request (Probe Request) frame, a probe response (Probe Response) frame, an association request (Association Request) frame, a reassociation request (Reassociation Request) frame, a disassociation (Disassociation) frame, a deauthentication (Deauthentication) frame, an authentication (Authentication) frame, and the like.

A ninth aspect of embodiments of this application provides a communication apparatus, including at least one processor, where the at least one processor is coupled to a memory. The memory is configured to store a program or instructions. The at least one processor is configured to execute the program or the instructions, so that the apparatus implements the method according to any one of the first aspect or the possible implementations of the first aspect, the apparatus implements the method according to any one of the second aspect or the possible implementations of the second aspect, the apparatus implements the method according to any one of the fifth aspect or the possible implementations of the fifth aspect, or the apparatus implements the method according to any one of the sixth aspect or the possible implementations of the sixth aspect.

A tenth aspect of embodiments of this application provides a computer-readable storage medium that stores one or more computer-executable instructions. When the computer-executable instruction is executed by a processor, the processor performs the method according to any one of the first aspect or the possible implementations of the first aspect, the processor performs the method according to any one of the second aspect or the possible implementations of the second aspect, the processor performs the method according to any one of the fifth aspect or the possible implementations of the fifth aspect, or the processor performs the method according to any one of the sixth aspect or the possible implementations of the sixth aspect.

An eleventh aspect of embodiments of this application provides a computer program product (or referred to as a computer program) for storing one or more computers. When the computer program product is executed by a processor, the processor performs the method according to any one of the first aspect or the possible implementations of the first aspect, the processor performs the method according to any one of the second aspect or the possible implementations of the second aspect, the processor performs the method according to any one of the fifth aspect or the possible implementations of the fifth aspect, or the processor performs the method according to any one of the sixth aspect or the possible implementations of the sixth aspect.

A twelfth aspect of embodiments of this application provides a chip system. The chip system includes at least one processor, configured to support a communication apparatus in implementing a function in any one of the first aspect or the possible implementations of the first aspect, configured to support a communication apparatus in implementing a function in any one of the second aspect or the possible implementations of the second aspect, configured to support a communication apparatus in implementing a function in any one of the fifth aspect or the possible implementations of the fifth aspect, or configured to support a communication apparatus in implementing a function in any one of the sixth aspect or the possible implementations of the sixth aspect.

In a possible design, the chip system may further include a memory, configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A thirteenth aspect of embodiments of this application provides a communication system. The communication system includes the communication apparatus according to the third aspect and the communication apparatus according to the fourth aspect; the communication system includes the communication apparatus according to the seventh aspect and the communication apparatus according to the eighth aspect; and/or the communication system includes the communication apparatus according to the ninth aspect.

For technical effects brought by any one of the design manners in the ninth aspect to the thirteenth aspect, refer to the technical effects brought by different implementations in the first aspect to the eighth aspect. Details are not described herein again.

It can be seen from the foregoing technical solution that the radio frame received and sent by the WLAN device includes the first information element used to carry the information about the neighbor AP, and the first information element includes the first field indicating the channel information in the information about the neighbor AP. When the value of the first field is the first value, the first field indicates that the channel information in the information about the neighbor AP is invalid or is not notified (or when the value of the first field is the first value, the first field indicates to remove the neighbor AP or disable the neighbor AP). Therefore, when the transmitter of the radio frame determines that a neighbor is not used to associate with the receiver of the radio frame, the value of the first field in the radio frame is set to the first value, so that the receiver of the radio frame determines that the channel information in the information about the neighbor AP is invalid or is not notified (or determines that the neighbor AP is removed or disabled), to prevent a legacy STA in the receiver of the radio frame from attempting, on a corresponding channel based on the channel information in the information about the neighbor AP, to probe and associate with the neighbor AP.

### BRIEF DESCRIPTION OF DRAWINGS

FIG. 1 is a schematic diagram of a communication system according to an embodiment of this application;
FIG. 2 is another schematic diagram of a communication system according to an embodiment of this application;
FIG. 3 is a schematic diagram of a radio frame according to an embodiment of this application;
FIG. 4 is another schematic diagram of a radio frame according to an embodiment of this application;
FIG. 5 is a schematic diagram of a radio frame according to an embodiment of this application;
FIG. 6 is another schematic diagram of a radio frame according to an embodiment of this application;
FIG. 7a is a schematic diagram of a communication method according to an embodiment of this application;
FIG. 7b is another schematic diagram of a communication method according to an embodiment of this application;
FIG. 8 is a schematic diagram of a communication apparatus according to an embodiment of this application; and
FIG. 9 is another schematic diagram of a communication apparatus according to an embodiment of this application.

### DESCRIPTION OF EMBODIMENTS

In this application, unless otherwise specified, for same or similar parts of embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

It can be understood that some optional features in embodiments of this application may be independently implemented in some scenarios without relying on another feature, for example, a solution on which the optional features are currently based, to resolve a corresponding technical problem and achieve corresponding effect, or may be combined with another feature based on a requirement in some scenarios. Correspondingly, the apparatus provided in embodiments of this application may also correspondingly implement these features or functions. Details are not described herein.

In description of this application, unless otherwise specified, "a plurality of" means two or more than two. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the expression such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the expressions such as "example" and "for example" is intended to present a related concept in a specific manner for ease of understanding.

For ease of understanding a method provided in embodiments of this application, the following describes a system architecture of the method provided in embodiments of this application. It may be understood that the system architecture described in embodiments of this application is intended to describe the technical solutions in embodiments of this application more clearly, and do not constitute any limitation on the technical solutions provided in embodiments of this application. The technical solutions provided in this application are applicable to a WLAN scenario, for example, are applicable to the standards of an IEEE 802.11 system, for example, the 802.11a/b/g standard, the 802.11n standard, the 802.11ac standard, the 802.11ax standard, or a next-generation standard, for example, the 802. 11be standard or a further next-generation standard.

Although embodiments of this application are mainly described by using an example of a deployed WLAN network, especially a network applying the standards of an IEEE 802.11 system, a person skilled in the art easily understands that aspects of this application may be extended to other networks using various standards or protocols, for example, Bluetooth (Bluetooth), a high-performance radio LAN (high performance radio LAN, HIPERLAN) (which is a wireless standard similar to the IEEE 802.11 standard, and mainly used in Europe), a wide area network (WAN), a personal area network (personal area network, PAN), or other networks that are known or developed in future. Therefore, the various aspects provided in this application are applicable to any appropriate wireless network regardless of coverage and wireless access protocols. Alternatively, embodiments of this application may be applied to a wireless local area network system, for example, an internet of things (internet of things, IoT) or a vehicle-to-everything (Vehicle to X, V2X) network. Certainly, embodiments of this application are applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication system applicable to this application is merely an example, and a communication system applicable to this application is not limited thereto. This is stated herein once for all, and is not repeated below.

A radio frame sending method and apparatus, and a radio frame receiving method and apparatus provided in embodiments of this application may be applied to a wireless communication system. The wireless communication system may be a wireless local area network (wireless local area network, WLAN) or a cellular network. The method may be implemented by a communication device in the wireless communication system or a chip or a processor in a communication device. The communication device may be a wireless communication device that supports parallel transmission on a plurality of links, for example, referred to as a multi-link device (multi-link device, MLD) or a multi-band device (multi-band device). Compared with a device that supports only single-link transmission, the multi-link device has higher transmission efficiency and a higher throughput.

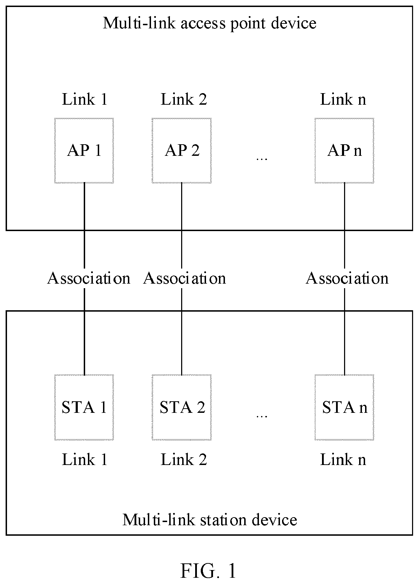

FIG. 1 is a schematic diagram of a communication system according to an embodiment of this application. It should be noted that, in the communication system shown in FIG. 1, an example in which a communication apparatus (a radio frame sending apparatus or a radio frame receiving apparatus) in this application is a multi-link device is used for description. However, in some embodiments, the communication apparatus (the radio frame sending apparatus or the radio frame receiving apparatus) in this application may alternatively be a single-link device. FIG. 1 is merely an example, and should not be construed as a limitation on this application.

As shown in FIG. 1, the communication system mainly includes at least one multi-link access point device (multi-link AP device) and at least one multi-link non-access point station device (multi-link non-AP STA device) (multi-link station device for short). The multi-link access point device and the multi-link station device may be collectively referred to as a multi-link device. The following describes the multi-link device.

Generally, the multi-link device includes one or more affiliated stations (affiliated stations, denoted as affiliated STAs). The affiliated STA is a logical station and may work on one link. The affiliated station may be an access point (access point, AP) or a non-access point station (non-access point station, non-AP STA). For ease of description, in this application, a multi-link device whose affiliated station is an AP may be referred to as a multi-link AP, a multi-link AP device (multi-link AP device), or an AP multi-link device (AP multi-link device); and a multi-link device (multi-link non-AP STA device) whose affiliated station is a non-AP STA may be referred to as a multi-link STA, a multi-link STA device, or a STA multi-link device (STA multi-link device). For ease of description, "a multi-link device includes an affiliated STA" is also briefly described as "a multi-link device includes a STA" in embodiments of this application.

It should be noted that a multi-link device includes a plurality of logical stations, and each of the logical stations works on one link, but the plurality of logical stations are allowed to work on a same link. A link identifier mentioned below represents one station working on one link. In other words, if there is at least one station on one link, at least one link identifier is used to represent the at least one station. A link mentioned below sometimes refers to a station that works on the link. During data transmission between a multi-link AP device and a multi-link STA, a link identifier may identify one link or a station on one link. Before communication, the multi-link AP device and the multi-link STA device may first negotiate or communicate a correspondence between the link identifier and the link or the station on the link. Therefore, during data transmission, the link identifier is carried to indicate the link or the station on the link, instead of transmitting a large amount of signaling information for indication. This reduces signaling overheads and improves transmission efficiency.

In an example, the multi-link AP device may send a management frame, for example, a beacon (beacon) frame, during establishment of a BSS, where the management frame carries an element including a plurality of link identifier information fields, and a correspondence between a link identifier and a station working over a link may be established in each of the link identifier information fields. Each of the link identifier information fields includes a link identifier, and further includes one or more of the following: a medium access control (medium access control, MAC) address, an operating class, and a channel number, where one or more of the MAC address, the operating class, and the channel number may indicate a link. In another example, in a multi-link association establishment process, the multi-link AP device and the multi-link station device negotiate a plurality of link identifier information fields. In subsequent communication, the multi-link AP device or the multi-link station device may represent a station in the multi-link device using a link identifier, and the link identifier may further represent one or more attributes of a MAC address of the station, an operating class, and a channel number. The MAC address may alternatively be replaced with an association identifier of the multi-link AP device associated with the station.

If a plurality of stations work over one link, the link identifier (which is a numeric ID) represents an operating class and a channel number corresponding to the link, and also represents an identifier of a station working over the link, for example, a MAC address or an AID of the station.

The multi-link device may implement wireless communication following the 802.11 family of standards. For example, a station supporting extremely high throughput (extremely high throughput, EHT), or a station supporting 802.11be or a station supporting a standard as well as 802.11be implements communication with another device. Certainly, the another device may be or may not be a multi-link device.

The non-AP MLD in this application may be a wireless communication chip, a wireless sensor, or a wireless communication terminal. For example, the non-AP MLD may be a user terminal, a user apparatus, an access apparatus, a subscriber station, a subscriber unit, a mobile station, a user agent, and user equipment capable of Wi-Fi communication. The user terminal may be any one of various devices capable of wireless communication, such as a handheld device, a vehicle-mounted device, a wearable device, an internet of things (internet of things, IoT) device, a computing device, another processing device connected to a wireless modem, and user equipment (user equipment, UE) of various forms, a mobile station (mobile station, MS), a terminal (terminal), terminal equipment (terminal equipment), a portable communication device, a handheld device, a portable computing device, an entertainment device, a game device or system, a global positioning system device, any other suitable device configured for network communication via a wireless medium, and the like. In addition, the non-AP MLD may support the 802.11be standard or a next-generation WLAN standard of the 802.11be standard. The non-AP MLD may also support a plurality of WLAN standards such as 802.11ax, 802.11ac, 802.11n, 802.11g, 802.11b, and 802.11a.

The AP MLD in embodiments of this application may be an apparatus that is deployed in a wireless communication network to provide a wireless communication function for a non-AP associated with the AP MLD. The AP MLD is mainly deployed at home, inside a building, and in a campus, with a typical coverage radius of tens of meters to 100-odd meters. Certainly, the AP MLD may alternatively be deployed outdoors. The AP MLD is equivalent to a bridge that connects a wired network and a wireless network. A main function of the AP MLD is to connect various wireless network clients together and then connect the wireless network to the Ethernet. Specifically, the AP MLD may be a communication device such as a base station with a Wi-Fi chip, a router, a gateway, a repeater, a communication server, a switch, or a bridge. The base station may include a macro base station, a micro base station, a relay station, and the like in various forms. In addition, the AP MLD may support the 802.11be standard or a next-generation WLAN standard of the 802.11be standard. The AP MLD may also support WLAN standards such as 802.11 ax, 802.11ac, 802.11n, 802.11g, 802.11b, and 802.11a.

The foregoing briefly describes the system architecture in embodiments of this application. To better understand the technical solutions in embodiments of this application, the following describes several content related to embodiments of this application.

### 1. Multi-link cooperation technology

Currently, a WLAN may work on low frequencies, including sub (sub) frequency bands of 1 gigahertz (GHz), 2.4 GHz, 5 GHz, 6 GHz, and the like. Although a plurality of links are configured for the 802.11ax (Wi-Fi 6) and previous multi-band Wi-Fi, generally a different basic service set (basic service set, BSS) is established for each of the plurality of links, only one link can be used to communicate with a station in a BSS to which the link belongs at a moment, and operations on each link lack sufficient cooperation.

In the IEEE 802.11 next-generation Wi-Fi extremely high throughput (extremely high throughput, EHT) protocol, an ultra-large bandwidth on the new 6 GHz band may be used to transmit information packets, and a plurality of noncontiguous links may also be aggregated to form an ultra-large bandwidth by using the multi-link cooperation technology. The multi-link cooperation technology can aggregate a larger bandwidth. In addition, a MAC layer may also be shared on the plurality of links, to flexibly transmit message packets, or simultaneously send message packets of a same service to a same station. A device that can implement the multi-link cooperation technology is referred to as a multi-link device below. An AP multi-link device and a station multi-link device may be associated over one link, so that a plurality of links can be quickly associated. A non-AP MLD may perform a multi-link establishment operation on one link (link) to simultaneously associate a plurality of links of the AP MLD. A link that performs multi-link association request/response (Multi-link Association Request/Response) frame exchange is referred to as a transmitted link (Transmitted Link). Correspondingly, another link is referred to as a non-transmitted link (Non-transmitted Link). A multi-link association request/response frame carries information about a plurality of links to implement simultaneous association of the plurality of links.

With reference to the foregoing FIG. 1, a multi-link establishment procedure is described as follows.

Step 1: The non-AP MLD sends an association request frame over a link 1 (Link 1). The association request frame carries STA side-related information of a link 2 (Link 2) in addition to STA side information of the link 1. The link 1 is referred to as a transmitted link, and the link 2 is referred to as a non-transmitted link.

Step 2: The AP MLD sends an association response frame to the non-AP MLD over the link 1. The association response frame carries AP side-related information of the link 2 in addition to the STA side information of the link 1.

Therefore, a STA 1 and a STA 2 of the non-AP respectively establish associations with an AP 1 and an AP 2 of the AP MLD. To carry related information of the non-AP MLD in an existing association request frame, a multi-link element (multi-link element, MLE) is defined in a protocol, and the multi-link element carries the related information of the non-AP MLD in an inheritance model format. It is similar to a multi-basic service set identifier element (multi-BSSID element) in an existing protocol.

It can be learned from the foregoing process that, a multi-link device (Multi-link Device, MLD) may also mean that the device has a plurality of radio frequency modules that respectively work on different frequency bands/channels. When a distance between channels on which two radio frequency modules in the device work is large enough, the two radio frequency modules may not interfere with each other and may operate independently. If any two links support simultaneous transmission over one link and reception over the other link, the two links support simultaneous transmit/receive (simultaneous transmit/receive, STR). Otherwise, the two links support non-STR (non-STR, NSTR). It is generally believed that in 802.11be, all AP MLDs other than a software-defined multi-link AP device (Soft AP MLDs) can support STR.

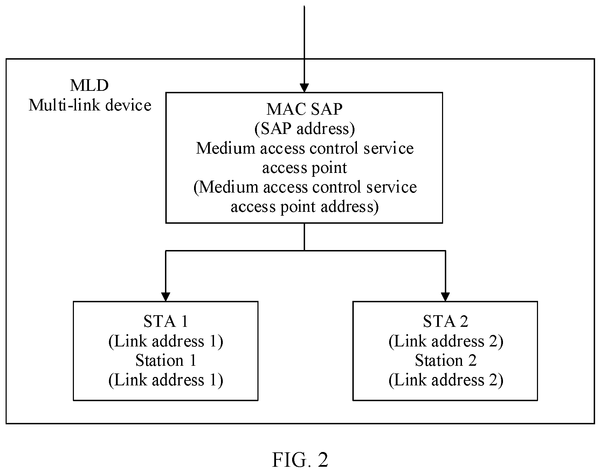

In addition to that each link has a respective medium access control address (medium access control address, MAC Address), each AP MLD has a medium access control service access point address (medium access control service access point address, MAC SAP Address), as shown in FIG. 2. In addition, a soft AP MLD can be considered as using software to implement a function of an AP MLD on a non-AP MLD device. In a common scenario, a terminal, for example, a mobile phone or a tablet computer is set as a soft AP MLD to allow another device to associate with the soft AP MLD.

In addition to the foregoing multi-link establishment procedure, the multi-link access point device and the multi-link station device may further communicate with each other by using a plurality of radio frames, for example, an association request frame, a reassociation request frame, an association response frame, a reassociation response frame, and a probe response frame. Different radio frames may carry MLEs, to carry station information of the multi-link device by using the MLEs. The MLE may also be referred to as a multi-link information unit.

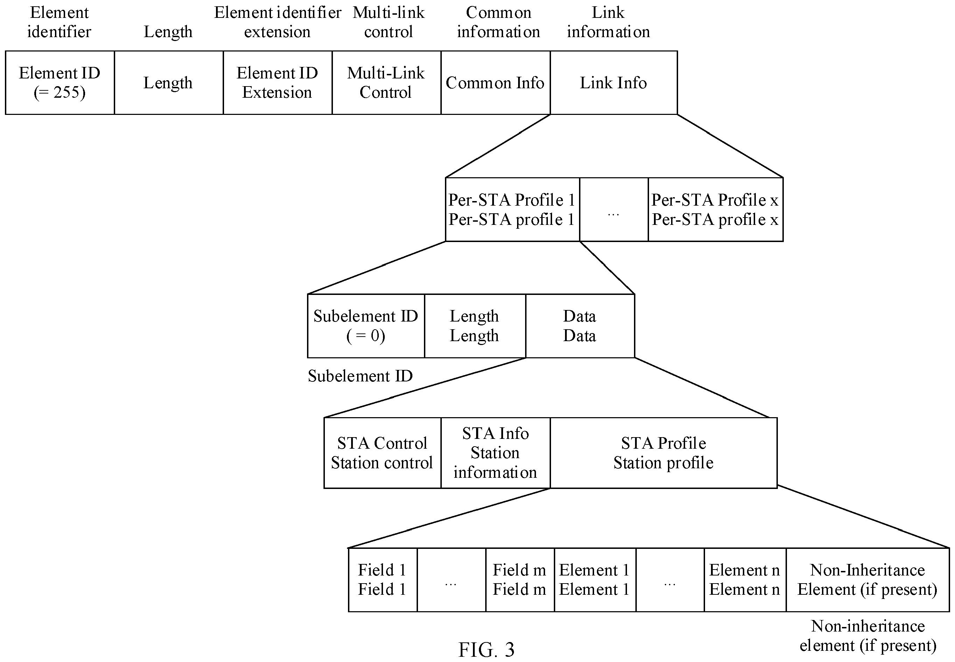

FIG. 3 is a schematic diagram of a frame structure of an MLE. The MLE includes an element identifier (Element ID) field (for example, a value of this field may be 255 shown in FIG. 3), a length (Length) field, an element identifier extension (Element ID Extension) field, a multi-link control (Multi-Link Control) field, a common information (Common Info) field, and a link information (Link Info) field. The common info field carries common information of a plurality of stations in a multi-link device and information about the multi-link device. The link info field carries information about a station on each link in the multi-link device. The multi-link control field carries a type of the multi-link element, and indication information indicating which fields are present (present) and which fields are not present in the common info field.

Further, as shown in FIG. 3, the link info field may further include one or more per-STA profile (Per-STA Profile) fields. In FIG. 3, an example in which a quantity of per-STA profile fields is x (x is greater than 1) is used. Each per-STA profile field may further include a subelement identifier (subelement ID) field (for example, a value of the subelement ID field may be 0 shown in FIG. 3), a length (Length) field, and a data (Data) field.

Further, as shown in FIG. 3, the data field may further include a station control (STA Control) field, a station information (STA Info) field, and a station profile (STA Profile) field.

Further, as shown in FIG. 3, the STA profile field includes a plurality of fields or fields (fields). In FIG. 3, an example in which a quantity of fields is m (x is greater than 1) is used. The STA profile field further includes a plurality of elements (Elements). In FIG. 3, an example in which a quantity of elements is n (n is greater than 1) is used. In addition, the STA profile field further includes a non-inheritance element (Non-inheritance element) if present (if present).

### 2. AP discovery process

In a WLAN communication process, if a STA wants to associate and establish a connection with an AP, the STA first needs to detect existence of the AP through scanning. There are two types of scanning: active scanning and passive scanning.

Passive scanning means receiving a management frame, for example, a beacon frame or a broadcast probe response frame sent by an AP on a channel. Specifically, the STA switches between different channels to search for a beacon (Beacon) frame sent by the AP. Once the STA obtains related information of the AP through the beacon frame, the STA may further obtain other additional information from the AP through a probe request/response (Probe Request/Response) frame exchange.

Active scanning means that a STA may actively send a broadcast probe request when no beacon frame is detected through listening, and an AP that receives the broadcast probe request may initiate random channel access to reply with a probe response if a condition is met.

To assist the STA in performing fast scanning, the AP adds a reduced neighbor report element (Reduced Neighbor Report element) to the beacon frame and the probe response frame of the AP, to prevent the STA from constantly scanning channels, and reduce scanning time of the STA.

### 3. Reduced neighbor report element (Reduced Neighbor Report element)

An AP adds a reduced neighbor report element in a management frame, for example, a beacon frame or a probe response frame. When scanning, a station STA receives association frames sent by APs, to obtain information about surrounding APs, and then selects a suitable AP for association. It should be noted that, in this embodiment and subsequent embodiments, a neighbor AP may be specifically an AP around an AP (denoted as a target AP herein) that sends the reduced neighbor report element (Reduced Neighbor Report element). For example, the neighbor AP is an AP on another link in an AP MLD in which the target AP is located. For another example, the neighbor AP is a neighbor AP of the target AP. For another example, the neighbor AP is another AP detected in a working area of the target AP. For another example, the neighbor AP is an AP co-located (Co-located) with the target AP. For another example, the neighbor AP is another affiliated AP that belongs to a same AP MLD as a current affiliated AP. Alternatively, there is another definition. This is not specifically limited herein.

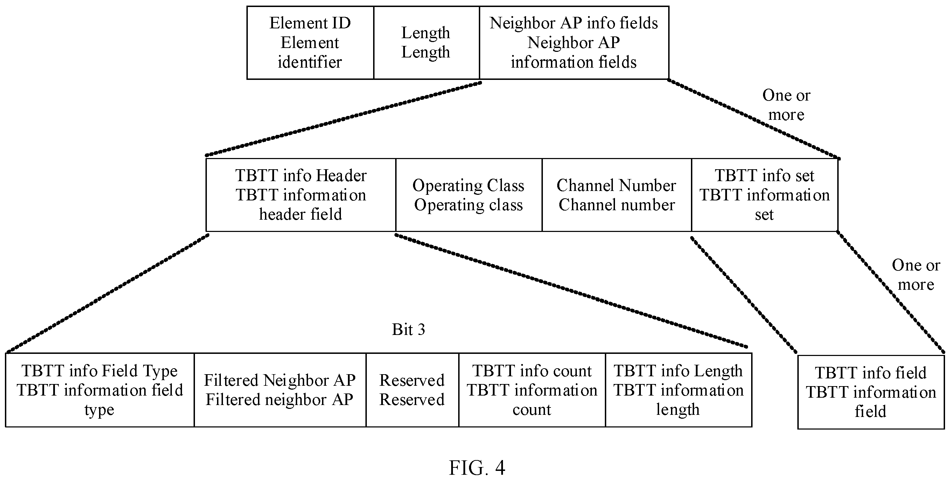

Specifically, the reduced neighbor report element (Reduced Neighbor Report element) indicates information about one or more neighbor APs on a channel. A frame format of the reduced neighbor report element is shown in FIG. 4, including an element identifier (Element ID) of the element and a length (Length) value indicating a length of carried information. In addition, each reduced neighbor report element carries one or more neighbor AP information (Neighbor AP info) fields. The neighbor AP information field may also be referred to as an information field of a neighbor AP for short. The following describes information included in an information field of each neighbor AP with reference to FIG. 4. The information field of each neighbor AP includes the following information.
1. Target beacon transmission time information header (target beacon transmission time information header, TBTT info Header) field, carrying the following information.
a. Target beacon transmission time information field type (target beacon transmission time information field type, TBTT info Field Type) field, indicating a type of target beacon transmission time information (target beacon transmission time information, TBTT info). The TBTT info field type field indicates, together with a TBTT info length (length) field, a format of a TBTT info field. In this field, values 1, 2, and 3 are reserved values.
b. Filtered neighbor AP (Filtered neighbor AP) field, indicating whether service set identifiers (service set IDs, SSIDs) of all BSSs carried in a neighbor AP info field match SSIDs in a probe request frame.
c. Reserved (Reserved) field. A bit occupied by the reserved (Reserved) field is a third bit (Bit 3), and a quantity of occupied bits is 1 bit (bit).
d. TBTT info count (count) field, indicating a quantity of TBTT info fields (fields) included in a TBTT info set.
e. TBTT info length field, indicating a length of each TBTT info field. Specific information formats carried in different lengths are shown in Table 1 below.

**Table 1**

| TBTT information length (octet) | Content carried in a TBTT information field |
|---|---|
| 1 | TBTT offset (offset) field of a neighbor AP |
| 2 | TBTT offset field and BSS parameter field of a neighbor AP |
| 4 | TBTT offset field and MLD parameter field of a neighbor AP |
| 5 | TBTT offset field and short (short) SSID field of a neighbor AP |
| 6 | TBTT offset field, short SSID field, and BSS parameter field of a neighbor AP |
| 7 | TBTT offset field and BSSID field of a neighbor AP |
| 8 | TBTT offset field, BSSID field, and BSS parameter field of a neighbor AP |
| 9 | TBTT offset field, BSSID field, BSS parameter field, and 20 MHz power spectral density (power spectral density, PSD) field of a neighbor AP |
| 10 | TBTT offset field, BSSID field, and MLD parameter field of a neighbor AP |
| 11 | TBTT offset field, BSSID field, and short SSID field of a neighbor AP |
| 12 | TBTT offset field, BSSID field, short SSID field, and BSS parameter field of a neighbor AP |
| 0,3,14,15 | Reserved |
| 13 | TBTT offset field, BSSID field, short SSID field, BSS parameter field, and 20 MHz PSD field of a neighbor AP |
| 16 | TBTT offset field, BSSID field, short SSID field, BSS parameter field, 20 MHz PSD field, and MLD parameter field of a neighbor AP |
| 17 to 255 | Reserved, but information about first 16 octets is the same as the fields carried when the TBTT information length is 16 |

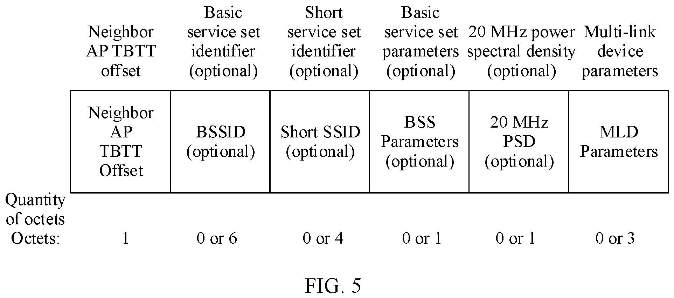

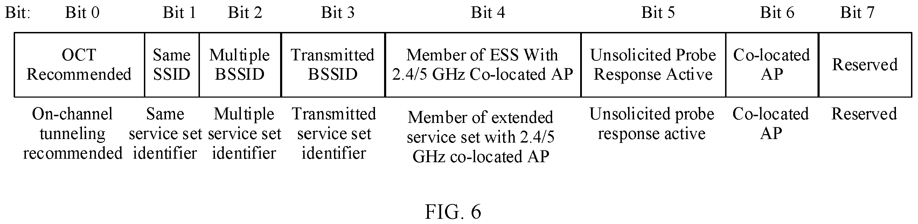

2. Operating class (Operating Class) field, indicating an operating class to which a working channel of a reported neighbor AP belongs. In this field, other values such as 0 and 255 are reserved values.
3. Channel number (Channel Number) field, indicating a channel number corresponding to a working channel of a reported neighbor AP. In this field, a channel number 0 is a reserved value. In addition, a STA side may determine a specific location of a channel of an AP on a frequency band based on the operating class field and the channel number field.
4. TBTT information set (TBTT info set) field, including one or more TBTT info fields. In addition, a frame format of each TBTT info field may be implemented in a manner shown in FIG. 5. As shown in FIG. 5, each TBTT info field may include the following information.
a. Neighbor AP target beacon transmission time offset (Neighbor AP TBTT offset) field, indicating an offset between beacon sending time for a BSS of a reported neighbor AP and beacon sending time for a BSS for sending the report, where the offset is measured in time units (time units, TUs), and one TU equals to 1024 microseconds or 1 millisecond. The value 254 indicates an offset of 254 TUs or higher, and the value 255 indicates an unknown offset value. A quantity of bits occupied by this field may be 1.
b. BSS identifier (BSSID) field, indicating a BSS identifier corresponding to the reported BSS. A quantity of octets occupied by this field may be 0 or 6. The field is an optional (optional) field.
c. Short service set identifier (Short SSID) field, indicating a service set identifier to which the BSS belongs. A quantity of octets occupied by this field may be 0 or 4. The field is an optional (optional) field.
d. BSS parameter (BSS Parameter) field, indicating a related parameter of the BSS, where a quantity of octets occupied by this field may be 0 or 1. The field is an optional (optional) field. As shown in FIG. 6, a BSS parameter specifically includes the following indication information. Bit 0: On-channel tunneling recommended (OCT recommended) field, indicating that the reported BSS expects to exchange an MPDU of a management type with the reported neighbor AP through the OCT mechanism.
   Bit 1: Same service set identifier (Same SSID) field, indicating whether the reported neighbor AP and an AP that transmits the report have a same SSID.
   Bit 2: Multiple basic service set identifier (Multiple BSSID) field, indicating whether the reported neighbor AP belongs to a part of a multiple BSSID set.
   Bit 3: Transmitted basic service set identifier (Transmitted BSSID) field, further indicating whether the reported neighbor AP is a transmitted BSSID or a non-transmitted BSSID if the reported neighbor AP belongs to a part of a multiple BSSID set.
   Bit 4: Member of extended service set with 2.4/5 GHz co-located AP (Member Of ESS With 2.4/5 GHz Co-Located AP) field, indicating whether the reported neighbor AP is co-located with a 2.4/5 GHz AP (that is, whether the reported neighbor AP is a 6 GHz only AP) and is a member of an extended service set.
   Bit 5: Unsolicited probe response active (Unsolicited Probe Response Active) field, indicating whether the reported neighbor AP enables unsolicited probe response.
   Bit 6: Co-located AP (Co-located AP) field, indicating whether the reported neighbor AP and an AP transmitting the report are co-located.
   Bit 7: Reserved (Reserved) value.
e. 20 MHz power spectral density (power spectral density, PSD) field, indicating a maximum transmit power spectral density. The field is an optional (optional) field. A quantity of octets occupied by this field may be 0 or 1.
f. Multi-link device parameters (MLD Parameters) field, indicating a related parameter of an MLD, and a quantity of octets occupied by this field may be 0 or 3. The MLD parameters field includes the following subfields:
   a multi-link device identifier (MLD ID) subfield, which occupies 8 bits and indicates an identifier of an AP MLD; a link identifier (Link ID) subfield, which occupies 4 bits and indicates a link identifier corresponding to a reported neighbor AP; a BSS parameters change counter (BSS Parameters Change Count) subfield, which occupies 8 bits and indicates a BSS parameters change counter, where when a key change occurs on the reported AP, the BSS parameters change counter increases, otherwise, the BSS parameters change counter remains unchanged; and a reserved (Reserved) subfield, which occupies 4 bits.

However, in a frame format design of a current reduced neighbor report element (Reduced Neighbor Report element), whether all neighbors necessarily support association with a STA is not considered. However, during actual application, not all the neighbors necessarily support association with the STA. For example, when a neighbor is a neighbor AP corresponding to a non-primary link of a soft AP MLD (soft AP MLD, also referred to as a software-defined AP MLD), a legacy STA needs to be prevented from reading a reduced neighbor report element and switching to a corresponding channel, to attempt to perform probe and association operations on an AP of the non-primary link. For another example, when a neighbor is an AP on a link in a multi-link device, to reduce power consumption or achieve another purpose, the neighbor may need to be disabled (disabled) or removed (removed). As a result, the neighbor no longer supports association with a STA. The following describes the two implementation examples separately.

One implementation example corresponds to a scenario in which a neighbor is a soft AP (soft AP). Currently, operations related to a soft AP MLD are being discussed in 802.11be. Because the soft AP MLD is non-STR (NSTR), the operation of the soft AP MLD is different from that of an ordinary STR AP MLD. For soft AP MLDs, links may be classified into primary links (Primary Links). Each soft AP MLD has only one primary link, and other links are referred to as non-primary links (non-primary links). The soft AP MLD sends a beacon frame only over the primary link, and does not send a beacon frame over the non-primary link. A legacy STA (legacy STA) cannot be associated with the non-primary link. Even if the legacy STA sends a broadcast probe request frame over the link, the soft AP MLD does not reply with a probe response frame. A non-AP MLD allows only to send a multi-link probe request frame over a primary link, to obtain information about an affiliated access point (affiliated AP) at a non-primary link side.

It should be noted that, a legacy station (legacy STA) mentioned in this embodiment and subsequent embodiments refers to a STA specified in a standard before 802.11be, for example, a STA specified in the 802.11a/b/g standard, the 802.11n standard, the 802.11ac standard, or the 802.11ax standard. Correspondingly, a non-legacy station refers to a STA specified in 802.11be and a standard after 802.11be.

In addition, an AP MLD needs to broadcast, by using a reduced neighbor report element in a beacon frame, information about another affiliated AP that belongs to the same AP MLD as a current affiliated AP. However, for a soft AP MLD, in one aspect, the soft AP MLD needs to broadcast information about an affiliated AP at another non-primary link side by using a reduced neighbor report element in a beacon frame on a primary link. In another aspect, the soft AP MLD needs to prevent a legacy STA from reading the reduced neighbor report element and then switching to a non-primary link to send a probe request.

Currently, a solution is to set a TBTT info field type field in a reduced neighbor report element corresponding to the non-primary link to a reserved value. In this way, the legacy STA cannot read a subsequent TBTT info field. However, this solution still has a risk, that is, although the legacy STA cannot read the TBTT info field, it can still obtain channel information based on an operating class field and a channel number field, switches to the non-primary link to send the probe request frame, and interferes normal operation of the Soft AP MLD.

The other implementation example corresponds to the scenario in which the neighbor is the AP on the link in the multi-link device.

Currently, that an AP MLD can disable (disable) an affiliated AP or remove (remove) an affiliated AP without affecting other links of the AP MLD is still discussed in 802.11be. For example, AP MLD has three links: a link 1, a link 2, and a link 3. When the AP MLD needs to disable or remove the link 3 for a reason (for example, reducing power consumption), corresponding reduced neighbor report elements of beacon frames on the link 1 and the link 2 may be notified in advance. In this way, a non-associated non-AP MLD does not probe (probe) information about an affiliated AP corresponding to the link 3.

Currently, a solution is to use a reserved bit in the reduced neighbor report element for indication. However, a disadvantage of this solution is that a legacy STA cannot read newly added bit indication information, and the legacy STA may still switch to the link 3 to send a probe request frame.

In conclusion, how to prevent a STA from accessing a neighbor AP that does not support association with the STA is a technical problem to be urgently resolved.

Therefore, this application provides a radio frame sending method and apparatus, and a radio frame receiving method and apparatus. When a value of a first field in a radio frame is a first value, the first field indicates that channel information in information about a neighbor AP is invalid or is not notified (or when the value of the first field is the first value, the first field indicates to remove the neighbor AP or disable the neighbor AP). Therefore, when a transmitter of the radio frame determines that a neighbor is not used to associate with a receiver of the radio frame, the value of the first field in the radio frame is set to the first value, so that the receiver of the radio frame determines that the channel information in the information about the neighbor AP is invalid or is not notified (or determines that the neighbor AP is removed or disabled), to prevent a legacy STA in the receiver of the radio frame from attempting, on a corresponding channel based on the channel information in the information about the neighbor AP, to probe and associate with the neighbor AP. The following describes a plurality of solutions provided in this application with reference to the accompanying drawings.

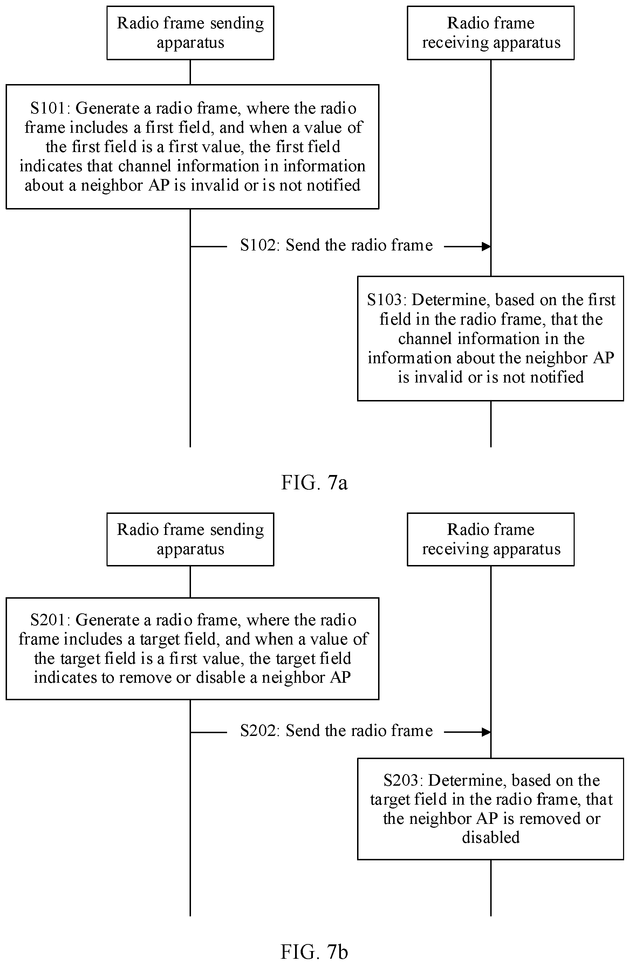

FIG. 7a is a schematic diagram of a communication method according to an embodiment of this application. The method includes the following steps. It may be understood that, as shown in FIG. 7a, the communication method relates to transmission of a radio frame. Therefore, the communication method may also be referred to as a radio frame sending method or a radio frame receiving method.

S101: A radio frame sending apparatus generates a radio frame, where the radio frame includes a first field, and when a value of the first field is a first value, the first field indicates that channel information in information about a neighbor AP is invalid or is not notified.

In this embodiment, the radio frame sending apparatus generates the radio frame, the radio frame includes a first information element, and the first information element includes the first field. The first information element is used to carry the information about the neighbor AP, the first field indicates the channel information in the information about the neighbor AP, and when the value of the first field is the first value, the first field indicates that the channel information in the information about the neighbor AP is invalid or is not notified.

It should be noted that, in this embodiment and subsequent embodiments, that when the value of the first field is the first value, the first field indicates that the channel information in the information about the neighbor AP is invalid or is not notified may alternatively be expressed as follows: When the value of the first field is the first value, the first field indicates that the channel information in the information about the neighbor AP is invalid, when the value of the first field is the first value, the first field indicates that the channel information in the information about the neighbor AP is not indicated, when the value of the first field is the first value, the first field indicates that the channel information in the information about the neighbor AP does not support association, when the value of the first field is the first value, the first field indicates that the channel information in the information about the neighbor AP does not support access, or the like. Optionally, in the radio frame generated in S101, the first information element included in the radio frame is a reduced neighbor report element (Reduced Neighbor Report element). For a frame format of the first information element, refer to the foregoing the descriptions in FIG. 4 to FIG. 6. Details are not described herein again.

In a possible implementation, the first field indicates a channel number corresponding to the channel information. Specifically, in the radio frame generated in S101, the first field indicating the channel information in the information about the neighbor AP may specifically indicate the channel number corresponding to the channel information, so that a receiver of the radio frame determines that the channel number corresponding to the channel information in the information about the neighbor AP is invalid or is not notified, to prevent a legacy STA in the receiver of the radio frame from attempting, on a corresponding channel based on the channel number of the channel information in the information about the neighbor AP, to probe and associate with the neighbor AP.

Optionally, the first field includes a channel number (Channel Number) field. For an implementation of the channel number field, refer to the related description content shown in FIG. 4. Details are not described herein again. In addition, in this embodiment, to enable this application to be compatible with definitions in standards (802.11ax, 802.11ac, 802.11n, 802.11g, 802.11b, and 802.11a) before 802.11be as much as possible, when the first field includes the channel number field, some reserved values in the channel number field may be selected as the first value. For example, the first value may be a reserved value 0, so that when a value of the channel number field is set to 0, the channel number field indicates that the channel number corresponding to the channel information in the information about the neighbor AP is invalid or is not notified. This prevents the legacy STA in the receiver of the radio frame from attempting, on the corresponding channel based on the channel number of the channel information in the information about the neighbor AP, to probe and associate with the neighbor AP.

In addition, a standard that the legacy STA complies with is a standard before 802.11be. Because the value of the first field is a reserved value, the legacy STA cannot obtain, based on the reserved value, an accurate channel number corresponding to the channel information. Therefore, if the receiver of the radio frame generated in S101 is the legacy STA, the legacy STA cannot obtain, based on the first field, the channel number corresponding to the channel information in the information about the neighbor AP. This prevents the legacy STA from associating with the neighbor based on the channel number corresponding to the channel information in the information about the neighbor AP.

In a possible implementation, the first field indicates an operating class to which the channel information belongs. Specifically, in the radio frame generated in S101, the first field indicating the channel information in the information about the neighbor AP may specifically indicate the operating class to which the channel information belongs, so that the receiver of the radio frame determines that the operating class to which the channel information in the information about the neighbor AP belongs is invalid or is not notified, to prevent the legacy STA in the receiver of the radio frame from attempting, on the corresponding channel based on the operating class to which the channel information in the information about the neighbor AP belongs, to probe and associate with the neighbor AP.

Optionally, the first field includes an operating class (Operating Class) field. For an implementation of the operating class field, refer to the related description content shown in FIG. 4. Details are not described herein again. In addition, in this embodiment, to enable this application to be compatible with definitions in standards (802.11ax, 802.11ac, 802.11n, 802.11g, 802.11b, and 802.11a) before 802.11be as much as possible, when the first field includes the operating class field, some reserved values in the operating class field may be selected as the first value. For example, the first value may be a reserved value 0 or 255, so that when a value of the operating class field is set to 0 or 255, the operating class field indicates that the operating class to which the channel information in the information about the neighbor AP belongs is invalid or is not notified. This prevents the legacy STA in the receiver of the radio frame from attempting, on the corresponding channel based on the operating class to which the channel information in the information of the neighbor AP belongs, to probe and associate with the neighbor AP.

In addition, a standard that the legacy STA complies with is a standard before 802.11be. Because the value of the first field is a reserved value, the legacy STA cannot obtain, based on the reserved value, an accurate operating class to which the channel information belongs. Therefore, if the receiver of the radio frame generated in S101 is the legacy STA, the legacy STA cannot obtain, based on the first field, the operating class to which the channel information in the information about the neighbor AP belongs. This prevents the legacy STA from associating with the neighbor based on the operating class to which the channel information in the information about the neighbor AP belongs.

It can be learned from the foregoing description that the first field may include the channel number field, or the first field may include the operating class field. However, during actual application, the first field may alternatively include both the channel number field and the operating class field. Therefore, the channel number field and the operating class field are implemented as a whole as a first field. In addition, in this implementation, the first value corresponding to the channel number field and the first value corresponding to the operating class field may be the same or different. This is not limited herein.

For example, in the radio frame generated in S101, when the first field includes both the channel number field and the operating class field, both the first value corresponding to the channel number field and the first value corresponding to the operating class field are 0. In this case, the first field in the radio frame generated in S101 indicates that the channel information in the information about the neighbor AP is invalid or is not notified; or the first field in the radio frame generated in S101 indicates that the channel number corresponding to the channel information in the information about the neighbor AP is invalid or is not notified and the operating class to which the channel information in the information about the neighbor AP belongs is invalid or is not notified. For another example, in the radio frame generated in S101, when the first field includes both the channel number field and the operating class field, the first value corresponding to the channel number field is 0, and the first value corresponding to the operating class field is 255. In this case, the first field in the radio frame generated in S101 indicates that the channel information in the information about the neighbor AP is invalid or is not notified; or the first field in the radio frame generated in S 101 indicates that the channel number corresponding to the channel information in the information about the neighbor AP is invalid or is not notified and the operating class to which the channel information in the information about the neighbor AP belongs is invalid or is not notified.

In addition, a standard that the legacy STA complies with is a standard before 802.11be. Because the value of the first field is a reserved value, the legacy STA cannot obtain, based on the reserved value, an accurate operating class to which the channel information belongs and the channel number corresponding to the channel information. Therefore, if the receiver of the radio frame generated in S101 is the legacy STA, the legacy STA cannot obtain, based on the first field, the channel number corresponding to the channel information and the operating class to which the channel information in the information about the neighbor AP belongs. This prevents the legacy STA from associating with the neighbor AP based on the channel number and the operating class to which the channel information in the information about the neighbor AP belongs.

In a possible implementation, when the value of the first field is the first value, the first field further indicates to remove the neighbor AP; or when the value of the first field is the first value, the first field further indicates to disable the neighbor AP. Specifically, in the radio frame generated in S101, when the neighbor AP is an AP on a link in a multi-link device, to reduce power consumption or achieve another purpose, the neighbor AP may need to be disabled (disabled) or removed (removed). As a result, the neighbor AP no longer supports association with a STA. Therefore, in the radio frame generated in S101, when the value of the first field indicating the channel information in the information about the neighbor AP is the first value, in addition to indicating that the channel information in the information about the neighbor AP is invalid or is not notified, the first filed further indicates status information of the neighbor AP, for example, indicates that the neighbor AP is (about to be) removed or indicates that the neighbor AP is (about to be) disabled. Therefore, the receiver of the radio frame determines that the neighbor AP is a non-associative neighbor AP.

In a possible implementation, the first information element indicates information about a neighbor AP on a non-primary link. Specifically, when the neighbor AP is a neighbor AP corresponding to a non-primary link of a soft AP MLD (soft AP MLD), a legacy STA needs to be prevented from reading a reduced neighbor report element and switching to a corresponding channel, to attempt to perform probe and association operations on an AP of the non-primary link.

In a possible implementation, the first information element further includes a second field, and the second field includes a first subfield and a second subfield. The second field indicates a basic service set parameter corresponding to a neighbor AP. In addition, the first subfield included in the second field indicates whether the basic service set expects to exchange a medium access control protocol data unit (medium access control protocol data unit, MAC PDU, MPDU for short) of a management type with the neighbor AP through an on-channel tunneling (on-channel tunneling, OCT) mechanism, and when the first field indicates that the channel information in the information about the neighbor AP is invalid or is not notified, the first subfield indicates that the basic service set expects to exchange the medium access control protocol data unit MPDU of the management type with the neighbor through the OCT mechanism. In addition, the second subfield included in the second field indicates whether the neighbor enables unsolicited probe response, and when the first field indicates that the channel information in the information about the neighbor AP is invalid or is not notified, the second subfield indicates the neighbor AP not to enable the unsolicited probe response.

Specifically, when the neighbor AP is a neighbor AP corresponding to a non-primary link of a soft AP MLD (soft AP MLD, also referred to as a software-defined AP MLD), in the radio frame generated in S101, the first information element used to carry the information about the neighbor AP further includes the second field indicating the basic service set parameter corresponding to the neighbor. The second field further includes the first subfield and the second subfield. In addition, when the first field indicates that the channel information in the information about the neighbor AP is invalid or is not notified, the first subfield indicates that the basic service set expects to exchange the MPDU of the management type with the neighbor through the OCT mechanism, and the second subfield indicates the neighbor not to enable the unsolicited probe response. Therefore, the first subfield and the second subfield in the second field are set, to further prevent the receiver of the radio frame from associating with the neighbor based on the basic service set parameter corresponding to the neighbor.

In a possible implementation, the second field is a basic service set parameter (basic service set parameter, BSS Parameter) field, the first subfield is an on-channel tunneling recommended (OCT recommended) field, and the second subfield is an unsolicited probe response active (Unsolicited Probe Response Active) subfield. For descriptions of the second field and the first subfield and the second subfield in the second field, refer to the related descriptions shown in FIG. 5 and FIG. 6.

Details are not described herein again.

In a possible implementation, the first information element further includes a third field, the third field indicates offset information of beacon frame sending time of the basic service set corresponding to the neighbor, and when the first field indicates that the channel information in the information about the neighbor AP is invalid or is not notified, the third field indicates that the offset information of the beacon frame sending time of the basic service set corresponding to the neighbor AP is unknown information. Specifically, when the neighbor AP is a neighbor AP corresponding to a non-primary link of a soft AP MLD (soft AP MLD, also referred to as a software-defined AP MLD), in the radio frame generated in S101, the first information element used to carry the information about the neighbor AP further includes the third field indicating the offset information of the beacon frame sending time of the basic service set corresponding to the neighbor AP. In addition, when the first field indicates that the channel information in the information about the neighbor AP is invalid or is not notified, the third field indicates that the offset information of the beacon frame sending time of the basic service set corresponding to the neighbor AP is the unknown information. Therefore, the third field is set, to further prevent the receiver of the radio frame from associating with the neighbor AP based on the offset information. For the description of the third field, refer to the related descriptions shown in FIG. 5 and FIG. 6. Details are not described herein again.

In a possible implementation, the radio frame generated in S101 is a management frame. Optionally, the radio frame includes one or more of a beacon (Beacon) frame, a probe request (Probe Request) frame, a probe response (Probe Response) frame, an association request (Association Request) frame, a reassociation request (Reassociation Request) frame, a disassociation (Disassociation) frame, a deauthentication (Deauthentication) frame, an authentication (Authentication) frame, and the like.

S 102: The radio frame sending apparatus sends the radio frame.

In this embodiment, after the radio frame sending apparatus generates the radio frame in S101, the radio frame sending apparatus sends the radio frame in S102. Correspondingly, a radio frame receiving apparatus receives the radio frame in S 102.

For example, in S102, the radio frame sending apparatus and the radio frame receiving apparatus may perform transmission on the radio frame based on the communication system shown in FIG. 1 or FIG. 2. To be specific, the radio frame is transmitted over one or more of a plurality of links between the radio frame sending apparatus and the radio frame receiving apparatus.

Optionally, the radio frame sending apparatus may perform sending preprocessing on the radio frame, and send, in S102, a processing result obtained through the sending preprocessing. For example, the sending preprocessing may include encryption, scrambling, and the like. Correspondingly, the radio frame sending apparatus may receive the processing result obtained through the sending preprocessing on the radio frame, and perform receiving preprocessing on the processing result in S102 to obtain the radio frame. For example, the receiving preprocessing may include decryption, descrambling, and the like.

S103: The radio frame receiving apparatus determines, based on the first field in the radio frame, that the channel information in the information about the neighbor AP is invalid or is not notified. In this embodiment, the radio frame receiving apparatus determines the channel information in the information about the neighbor AP based on the radio frame received in S102.

Specifically, in S103, the radio frame receiving apparatus may determine the channel information in the information about the neighbor AP based on the value of the first field that is in the first information element in the received radio frame and that indicates the channel information in the information about the neighbor AP. It should be noted that when the radio frame receiving method is applied to a non-legacy station (non-legacy STA), that is, when the radio frame receiving apparatus is the non-legacy STA, the non-legacy STA determines, based on a manner in which the value of the first field in the radio frame is set to the first value, that the channel information in the information about the neighbor AP indicated by the radio frame is not notified. In addition, the non-legacy STA may further obtain the channel information in the information about the neighbor AP based on another message/information element/field, for example, a primary channel (Primary Channel) field in a high throughput operation element (HT Operation element). When the radio frame receiving method is applied to a legacy station (legacy STA), that is, when the radio frame receiving apparatus is the legacy STA, the legacy STA obtains, through interpretation, that the first value is a reserved value based on a manner in which the value of the first field in the radio frame is set to the first value. Therefore, the legacy STA determines that the channel information in the information about the neighbor AP indicated by the radio frame is invalid.

Specifically, because this application is applied to a wireless local area network system that supports IEEE 802.11ax next-generation Wi-Fi protocols, for example, related protocols such as 802.11be, or the EHT, a standard with which a STA that runs based on the related protocols such as 802.1The or the EHT complies is 802. 1 The or a standard after 802.11be, so that the STA may obtain, by reading, a meaning corresponding to a case in which the value of the first field is the first value. Therefore, as the radio frame receiving apparatus in S103, the STA may determine the channel information in the information about the neighbor AP based on the value of the first field that is in the first information element in the radio frame and that indicates the channel information in the information about the neighbor AP. In addition, when the value of the first field is the first value, the STA determines that the channel information in the information about the neighbor AP is invalid or is not notified.

In addition, a standard that the legacy STA complies with is a standard before 802.11be. Because the value of the first field is a reserved value, the legacy STA cannot obtain accurate channel information of the neighbor AP based on the reserved value. Therefore, as the radio frame receiving apparatus in S103, the legacy STA may determine the channel information in the information about the neighbor AP based on the value of the first field that is in the first information element in the radio frame and that indicates the channel information in the information about the neighbor AP. In addition, when the value of the first field is the first value, the legacy STA determines that the value of the first field is a reserved value. Because the legacy STA cannot identify a meaning of the first field, the legacy STA cannot determine the channel information in the information about the neighbor AP. Therefore, the legacy STA determines that the channel information in the information about the neighbor AP is invalid.

In an implementation, a neighbor AP indicated by the first information element in the radio frame is a neighbor AP corresponding to a non-primary link of a soft AP MLD (soft AP MLD, also referred to as a software-defined AP MLD).

For a non-AP MLD (namely, the radio frame receiving apparatus), the non-AP MLD obtains information about an affiliated AP corresponding to the non-primary link by sending a multi-link probe request frame over a primary link. However, in a multi-link probe response frame replied by the soft AP MLD, the multi-link probe response frame may indicate channel number information of the non-primary link based on a primary channel field in an HT operation element (high throughput operation element). Therefore, a channel number field in the reduced neighbor report element is set to a special reserved value, for example, 0, so that a subsequent operation of the non-AP MLD is not affected. In addition, the legacy STA cannot obtain the channel information based on the reduced neighbor report element, to prevent the legacy STA from switching to the non-primary link to send a probe request frame.

In an implementation, a neighbor AP indicated by the first information element in the radio frame is an AP on a link in a multi-link device.

When an AP MLD wants to disable or remove an affiliated AP, the AP MLD may notify a non-AP MLD (namely, the radio frame receiving apparatus) in advance by using a reduced neighbor report element in a beacon on another link. In addition, the legacy STA needs to be prevented from switching to a link on which an affiliated AP about to be removed is located to send a probe request frame or an association request frame. In this case, the operating class field or the channel number field, or both fields may be set to a reserved value, such as 0 or 255. Based on this manner, the non-AP MLD may determine that a corresponding affiliated AP is about to be removed. In addition, the legacy STA cannot obtain the channel information, to prevent the legacy STA from switching to a corresponding channel to send a probe request frame or an association request frame.

Therefore, according to the description of the embodiment shown in FIG. 7a, during actual application, when not all neighbor APs necessarily support association with a STA, for example, when a neighbor AP is the neighbor AP corresponding to the non-primary link of the soft AP MLD (soft AP MLD, also referred to as the software-defined AP MLD), the legacy STA needs to be prevented from reading the reduced neighbor report element and switching to the corresponding channel, to attempt to perform probe and association operations on the AP of the non-primary link. For another example, when a neighbor AP is the AP on the link in the multi-link device, to reduce power consumption or achieve another purpose, the neighbor AP may need to be disabled (disabled) or removed (removed). As a result, the neighbor AP no longer supports association with a STA. Based on the foregoing technical solution, the value of the first field in the radio frame may be set to the first value, so that the receiver of the radio frame determines that the channel information in the information about the neighbor AP is invalid or is not notified, to prevent a legacy STA in the receiver of the radio frame from attempting, on a corresponding channel based on the channel information in the information about the neighbor AP, to probe and associate with the neighbor AP. FIG. 7b is a schematic diagram of a communication method according to an embodiment of this application. The method includes the following steps. It may be understood that, as shown in FIG. 7b, the communication method relates to transmission of a radio frame. Therefore, the communication method may also be referred to as a radio frame sending method or a radio frame receiving method.

S201: A radio frame sending apparatus generates a radio frame, where the radio frame includes a target field, and when a value of the target field is a first value, the target field indicates to remove a neighbor AP or disable a neighbor AP.

In this embodiment, the radio frame sending apparatus generates the radio frame, the radio frame includes a first information element, and the first information element includes a target field. The first information element is used to carry information about the neighbor AP, and when the value of the target field is the first value, the target field indicates to remove the neighbor AP or disable the neighbor AP.

In a possible implementation, the target field in the radio frame generated in S201 includes at least one of the following:
a channel number (Channel Number) field;
an operating class (Operating Class) field;
a reserved (Reserved) field in a target beacon transmission time information header (target beacon transmission time information header, TBTT info Header) field; or
a target beacon transmission time information field type (target beacon transmission time information field type, TBTT info Field Type) field.

Based on the foregoing technical solution, the target field may be implemented in the foregoing manners. The first value is a reserved value of any one of the foregoing fields. Therefore, when the radio frame receiving method is applied to a non-legacy station (non-legacy STA), the non-legacy STA determines, based on a manner in which the value of the target field in the radio frame is set to the first value, that the neighbor AP is (about to be) removed or (about to be) disabled. When the radio frame receiving method is applied to a legacy station (legacy STA), the legacy STA obtains, through interpretation, that the first value is a reserved value based on a manner in which the value of the target field in the radio frame is set to the first value. Therefore, the legacy STA determines that the target field is an invalid field.

Optionally, when the target field includes the channel number (Channel Number) field, the first value is 0. When the target field includes the operating class (Operating Class) field, the first value is 0 or 255. When the target field includes the reserved (Reserved) field in the TBTT info header field, the first value is 0 or 1. When the target field includes the TBTT info field type field, the first value is 1, 2, or 3. Specifically, for an implementation of the target field, refer to the related descriptions in FIG. 4 to FIG. 6. Details are not described herein again.

In a possible implementation, the first information element further includes a second field, and the second field includes a first subfield and a second subfield. The second field indicates a basic service set parameter corresponding to a neighbor AP. In addition, the first subfield included in the second field indicates whether the basic service set expects to exchange a medium access control protocol data unit (medium access control protocol data unit, MAC PDU, MPDU for short) of a management type with the neighbor AP through an on-channel tunneling (on-channel tunneling, OCT) mechanism, and when the target field indicates to remove the neighbor AP or disable the neighbor AP, the first subfield indicates that the basic service set expects to exchange the medium access control protocol data unit MPDU of the management type with the neighbor AP through the OCT mechanism. In addition, the second subfield included in the second field indicates whether the neighbor AP enables unsolicited probe response, and when the target field indicates to remove the neighbor AP or disable the neighbor AP, the second subfield indicates the neighbor AP not to enable the unsolicited probe response.

Specifically, when the neighbor AP is a neighbor AP corresponding to a non-primary link of a soft AP MLD (soft AP MLD, also referred to as a software-defined AP MLD), in the radio frame generated in S201, the first information element used to carry the information about the neighbor AP further includes the second field indicating the basic service set parameter corresponding to the neighbor AP. The second field further includes the first subfield and the second subfield. In addition, when the target field indicates to remove the neighbor AP or disable the neighbor AP, the first subfield indicates that the basic service set expects to exchange the MPDU of the management type with the neighbor AP through the OCT mechanism, and the second subfield indicates the neighbor AP not to enable the unsolicited probe response. Therefore, the first subfield and the second subfield in the second field are set, to further prevent a receiver of the radio frame from associating with the neighbor AP based on the basic service set parameter corresponding to the neighbor AP.

Optionally, the second field is a basic service set parameter (basic service set parameter, BSS Parameter) field, the first subfield is an on-channel tunneling recommended (OCT recommended) field, and the second subfield is an unsolicited probe response active (Unsolicited Probe Response Active) subfield. For descriptions of the second field and the first subfield and the second subfield in the second field, refer to the related descriptions shown in FIG. 5 and FIG. 6. Details are not described herein again.

In a possible implementation, the first information element further includes a third field, and the third field indicates offset information of beacon frame sending time of the basic service set corresponding to the neighbor AP, and when the target field indicates to remove the neighbor AP or disable the neighbor AP, the third field indicates that the offset information of the beacon frame sending time of the basic service set corresponding to the neighbor AP is unknown information. Specifically, when the neighbor AP is a neighbor AP corresponding to a non-primary link of a soft AP MLD (soft AP MLD, also referred to as a software-defined AP MLD), in the radio frame generated in S201, the first information element used to carry the information about the neighbor AP further includes the third field indicating the offset information of the beacon frame sending time of the basic service set corresponding to the neighbor AP. In addition, when the target field indicates to remove the neighbor AP or disable the neighbor AP, the third field indicates that the offset information of the beacon frame sending time of the basic service set corresponding to the neighbor AP is the unknown information. Therefore, the third field is set, to further prevent the receiver of the radio frame from associating with the neighbor AP based on the offset information. For the description of the third field, refer to the related descriptions shown in FIG. 5 and FIG. 6. Details are not described herein again.

In a possible implementation, the first information element in the radio frame generated in S201 is a reduced neighbor report element (Reduced Neighbor Report element).

In a possible implementation, the radio frame generated in S201 is a management frame. Optionally, the radio frame includes one or more of a beacon (Beacon) frame, a probe request (Probe Request) frame, a probe response (Probe Response) frame, an association request (Association Request) frame, a reassociation request (Reassociation Request) frame, a disassociation (Disassociation) frame, a deauthentication (Deauthentication) frame, an authentication (Authentication) frame, and the like.

S202: The radio frame sending apparatus sends the radio frame.

In this embodiment, after the radio frame sending apparatus generates the radio frame in S201, the radio frame sending apparatus sends the radio frame in S202. Correspondingly, a radio frame receiving apparatus receives the radio frame in S202.

For example, in S202, the radio frame sending apparatus and the radio frame receiving apparatus may perform transmission on the radio frame based on the communication system shown in FIG. 1 or FIG. 2. To be specific, the radio frame is transmitted over one or more of a plurality of links between the radio frame sending apparatus and the radio frame receiving apparatus.

Optionally, the radio frame sending apparatus may perform sending preprocessing on the radio frame, and send, in S202, a processing result obtained through the sending preprocessing. For example, the sending preprocessing may include encryption, scrambling, and the like. Correspondingly, the radio frame sending apparatus may receive the processing result obtained through the sending preprocessing on the radio frame, and perform receiving preprocessing on the processing result in S202 to obtain the radio frame. For example, the receiving preprocessing may include decryption, descrambling, and the like.

S203: The radio frame receiving apparatus determines, based on the target field in the radio frame, that the neighbor AP is (about to be) removed or the neighbor AP is (about to be) disabled.

Specifically, in S203, the radio frame receiving apparatus may determine, based on the first value of the target field in the first information element in the received radio frame, that the neighbor AP is (about to be) removed or (about to be) disabled.

Because this application is applied to a wireless local area network system that supports IEEE 802. 1 1ax next-generation Wi-Fi protocols, for example, related protocols such as 802. 1 1be, or the EHT, a standard with which a STA that runs based on the related protocols such as 802.11be or the EHT complies is 802.11be or a standard after 802. 1 1be, so that the STA may obtain, by reading, a meaning corresponding to a case in which the value of the target field is the first value. Therefore, as the radio frame receiving apparatus in S 103, the STA may determine, based on the first value of the target field in the first information element in the radio frame, that the neighbor AP is (about to be) removed or (about to be) disabled.

A standard with which the legacy STA complies is a standard before 802.11be. Because the value of the first field is a reserved value, the legacy STA cannot obtain, based on the reserved value, accurate information indicated by the target field. Therefore, the legacy STA serves as the radio frame receiving apparatus in S103, and based on a manner in which the value of the target field in the radio frame is set to the first value, the legacy STA obtains, through interpretation, that the first value is the reserved value. Therefore, the legacy STA determines that the target field is an invalid field.

In an implementation, a neighbor AP indicated by the first information element in the radio frame is an AP on a link in a multi-link device.

When an AP MLD wants to disable or remove an affiliated AP, the AP MLD may notify a non-AP MLD (namely, the radio frame receiving apparatus) in advance by using a reduced neighbor report element in a beacon on another link. In addition, the legacy STA needs to be prevented from switching to a link on which an affiliated AP about to be removed is located to send a probe request frame or an association request frame. In this case, the value of the target field may be set to the first value. Based on this manner, the non-AP MLD may determine that a corresponding affiliated AP is about to be removed. In addition, the legacy STA cannot obtain the channel information, to prevent the legacy STA from switching to a corresponding channel to send a probe request frame or an association request frame.

Therefore, according to the description of the embodiment shown in FIG. 7a, during actual application, when not all neighbors necessarily support association with a STA, for example, when a neighbor AP is the neighbor AP corresponding to the non-primary link of the soft AP MLD (soft AP MLD, also referred to as the software-defined AP MLD), to avoid impact on a device on a primary link, the neighbor AP may not support association with a STA on the non-primary link. For another example, when a neighbor is the AP on the link in the multi-link device, to reduce power consumption or achieve another purpose, the neighbor AP may need to be disabled (disabled) or removed (removed). As a result, the neighbor AP no longer supports association with a STA.

Based on the technical solution shown in FIG. 7b, when a transmitter of the radio frame determines that a neighbor AP is not used to associate with a receiver of the radio frame, the value of the target field in the radio frame is set to the first value, so that the receiver of the radio frame determines that the neighbor AP is (about to be) removed or (about to be) disabled, to prevent the receiver of the radio frame from attempting, based on the channel information in the information about the neighbor AP, to associate with the neighbor AP.

The foregoing describes this application from the perspective of methods, and the following further describes this application from the perspective of apparatuses.

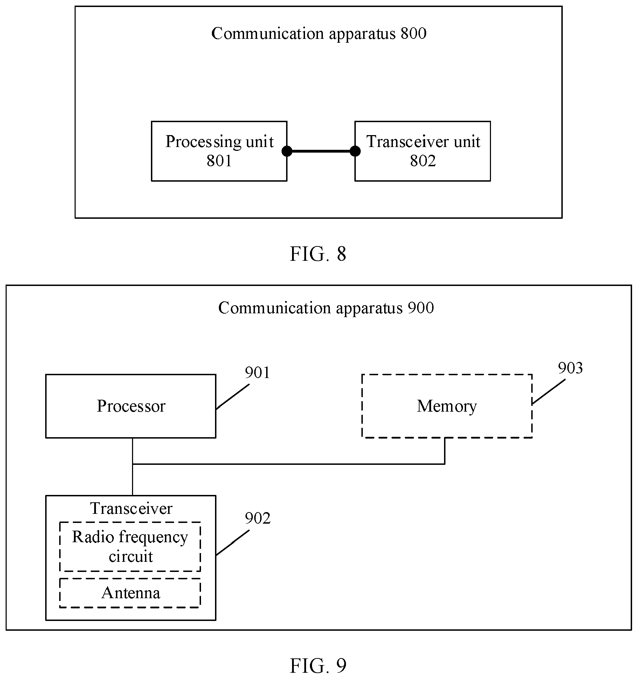

FIG. 8 is a schematic diagram of a communication apparatus 800 according to an embodiment of this application. The communication apparatus 800 includes a processing unit 801 and a transceiver unit 802.

In an implementation, the communication apparatus 800 may be specifically a radio frame sending apparatus, and is configured to implement the radio frame sending method in the embodiment shown in FIG. 7a. Correspondingly, the processing unit 801 and the transceiver unit 802 include the following processes.

The processing unit 801 is configured to generate a radio frame, where the radio frame includes a first information element, and the first information element includes a first field. The first information element is used to carry information about a neighbor AP, the first field indicates channel information in the information about the neighbor AP, and when a value of the first field is a first value, the first field indicates that the channel information in the information about the neighbor AP is invalid or is not notified.

The transceiver unit 802 is configured to send the radio frame.

Based on the foregoing technical solution, during actual application, when not all neighbors necessarily support association with a STA, for example, when a neighbor is a neighbor AP corresponding to a non-primary link of a soft AP MLD (soft AP MLD, also referred to as a software-defined AP MLD), a legacy STA needs to be prevented from reading a reduced neighbor report element and switching to a corresponding channel, to attempt to perform probe and association operations on an AP of the non-primary link. For another example, when a neighbor is an AP on a link in a multi-link device, to reduce power consumption or achieve another purpose, the neighbor may need to be disabled (disabled) or removed (removed). As a result, the neighbor no longer supports association with a STA. The radio frame sent by the transceiver unit 802 includes the first information element used to carry the information about the neighbor AP, and the first information element includes the first field indicating the channel information in the information about the neighbor AP. When the value of the first field is the first value, the first field indicates that the channel information in the information about the neighbor AP is invalid or is not notified. Therefore, when a transmitter of the radio frame determines that a neighbor is not used to associate with a receiver of the radio frame, the value of the first field in the radio frame is set to the first value, so that the receiver of the radio frame determines that the channel information in the information about the neighbor AP is invalid or is not notified, to prevent a legacy STA in the receiver of the radio frame from attempting, on a corresponding channel based on the channel information in the information about the neighbor AP, to probe and associate with the neighbor AP. In another implementation, the communication apparatus 800 may alternatively be a radio frame receiving apparatus, and is configured to implement the radio frame receiving method in the embodiment shown in FIG. 7a. Correspondingly, the processing unit 801 and the transceiver unit 802 include the following processes.

The transceiver unit 802 is configured to receive a radio frame, where the radio frame includes a first information element, and the first information element includes a first field. The first information element is used to carry information about a neighbor AP, and the first field indicates channel information in the information about the neighbor AP.

The processing unit 801 is configured to determine the channel information in the information about the neighbor AP based on the radio frame, where when a value of the first field is a first value, the first field indicates that the channel information in the information about the neighbor AP is invalid or is not notified.

Based on the foregoing technical solution, during actual application, when not all neighbors necessarily support association with a STA, for example, when a neighbor is a neighbor AP corresponding to a non-primary link of a soft AP MLD (soft AP MLD, also referred to as a software-defined AP MLD), a legacy STA needs to be prevented from reading a reduced neighbor report element and switching to a corresponding channel, to attempt to perform probe and association operations on an AP of the non-primary link. For another example, when a neighbor is an AP on a link in a multi-link device, to reduce power consumption or achieve another purpose, the neighbor may need to be disabled (disabled) or removed (removed). As a result, the neighbor no longer supports association with a STA. The radio frame received by the transceiver unit 802 includes the first information element used to carry the information about the neighbor AP, and the first information element includes the first field indicating the channel information in the information about the neighbor AP. When the value of the first field is the first value, the first field indicates that the channel information in the information about the neighbor AP is invalid or is not notified. Therefore, when a transmitter of the radio frame determines that a neighbor is not used to associate with a receiver of the radio frame, the value of the first field in the radio frame is set to the first value, so that the receiver of the radio frame determines that the channel information in the information about the neighbor AP is invalid or is not notified, to prevent a legacy STA in the receiver of the radio frame from attempting, on a corresponding channel based on the channel information in the information about the neighbor AP, to probe and associate with the neighbor AP. In a possible implementation, the first field indicates a channel number corresponding to the channel information.

In a possible implementation, the first field includes a channel number (Channel Number) field. In a possible implementation, the first field indicates an operating class to which the channel information belongs.

In a possible implementation, the first field includes an operating class Operating Class field.

In a possible implementation, when the value of the first field is the first value, the first field further indicates to remove the neighbor AP; or when the value of the first field is the first value, the first field further indicates to disable the neighbor AP.

In a possible implementation, the radio frame further includes a target field. When a value of the target field is a second value, the target field indicates to remove the neighbor AP; or when a value of the target field is a second value, the target field indicates to disable the neighbor AP. Optionally, the target field includes at least one of the following: a reserved (Reserved) field in a target beacon transmission time information header (target beacon transmission time information header, TBTT info Header) field, a target beacon transmission time information field type (target beacon transmission time information field type, TBTT info Field Type) field, or the like. Optionally, when the target field includes the reserved (Reserved) field in the TBTT info header field, the first value is 0 or 1. When the target field includes the TBTT info field type field, the first value is 1, 2, or 3.

In a possible implementation, the first information element indicates information about a neighbor AP on a non-primary link.

In a possible implementation, the first information element further includes a second field, and the second field includes a first subfield and a second subfield. The second field indicates a basic service set parameter corresponding to a neighbor. In addition, the first subfield included in the second field indicates whether the basic service set expects to exchange a medium access control protocol data unit (medium access control protocol data unit, MAC PDU, MPDU for short) of a management type with the neighbor through an on-channel tunneling (on-channel tunneling, OCT) mechanism, and when the first field indicates that the channel information in the information about the neighbor AP is invalid or is not notified, the first subfield indicates that the basic service set expects to exchange the medium access control protocol data unit MPDU of the management type with the neighbor through the OCT mechanism. In addition, the second subfield included in the second field indicates whether the neighbor enables unsolicited probe response, and when the first field indicates that the channel information in the information about the neighbor AP is invalid or is not notified, the second subfield indicates the neighbor not to enable the unsolicited probe response.

In a possible implementation, the second field is a basic service set parameter (basic service set parameter, BSS Parameter) field, the first subfield is an on-channel tunneling recommended (OCT recommended) field, and the second subfield is an unsolicited probe response active (Unsolicited Probe Response Active) subfield.

In a possible implementation, the first information element further includes a third field, the third field indicates offset information of beacon frame sending time of the basic service set corresponding to the neighbor, and when the first field indicates that the channel information in the information about the neighbor AP is invalid or is not notified, the third field indicates that the offset information of the beacon frame sending time of the basic service set corresponding to the neighbor is unknown information.

In a possible implementation, the first information element is a reduced neighbor report element (Reduced Neighbor Report element).

In a possible implementation, the radio frame is a management frame.

Optionally, the radio frame includes one or more of a beacon (Beacon) frame, a probe request (Probe Request) frame, a probe response (Probe Response) frame, an association request (Association Request) frame, a reassociation request (Reassociation Request) frame, a disassociation (Disassociation) frame, a deauthentication (Deauthentication) frame, an authentication (Authentication) frame, and the like.

In an implementation, the communication apparatus 800 may be specifically a radio frame sending apparatus, and is configured to implement the radio frame sending method in the embodiment shown in FIG. 7b. Correspondingly, the processing unit 801 and the transceiver unit 802 include the following processes.

Based on the foregoing technical solution, during actual application, when not all neighbors necessarily support association with a STA, for example, when a neighbor is a neighbor AP corresponding to a non-primary link of a soft AP MLD (soft AP MLD, also referred to as a software-defined AP MLD), a legacy STA needs to be prevented from reading a reduced neighbor report element and switching to a corresponding channel, to attempt to perform probe and association operations on an AP of the non-primary link. For another example, when a neighbor is an AP on a link in a multi-link device, to reduce power consumption or achieve another purpose, the neighbor may need to be disabled (disabled) or removed (removed). As a result, the neighbor no longer supports association with a STA. The radio frame sent by the transceiver unit 801 includes the first information element used to carry information about a neighbor AP, and the first information element includes a target field. When a value of the target field is a first value, the target field indicates to remove or disable the neighbor AP. Therefore, when a transmitter of the radio frame determines that a neighbor is not used to associate with a receiver of the radio frame, the value of the target field in the radio frame is set to the first value, so that the receiver of the radio frame determines that the neighbor AP is (about to be) removed or (about to be) disabled, to prevent the receiver of the radio frame from attempting, based on channel information in the information about the neighbor AP, to associate with the neighbor.

In another implementation, the communication apparatus 800 may be specifically a radio frame receiving apparatus, and is configured to implement the radio frame receiving method in the embodiment shown in FIG. 7b. Correspondingly, the processing unit 801 and the transceiver unit 802 include the following processes.

Based on the foregoing technical solution, during actual application, when not all neighbors necessarily support association with a STA, for example, when a neighbor is a neighbor AP corresponding to a non-primary link of a soft AP MLD (soft AP MLD, also referred to as a software-defined AP MLD), a legacy STA needs to be prevented from reading a reduced neighbor report element and switching to a corresponding channel, to attempt to perform probe and association operations on an AP of the non-primary link. For another example, when a neighbor is an AP on a link in a multi-link device, to reduce power consumption or achieve another purpose, the neighbor may need to be disabled (disabled) or removed (removed). As a result, the neighbor no longer supports association with a STA. The radio frame received by the transceiver unit 801 includes the first information element used to carry information about a neighbor AP, and the first information element includes a target field. When a value of the target field is a first value, the target field indicates to remove or disable the neighbor AP. Therefore, when a transmitter of the radio frame determines that a neighbor is not used to associate with a receiver of the radio frame, the value of the target field in the radio frame is set to the first value, so that the receiver of the radio frame determines that the neighbor AP is (about to be) removed or (about to be) disabled, to prevent the receiver of the radio frame from attempting, based on channel information in the information about the neighbor AP, to associate with the neighbor.

In a possible implementation, the target field includes at least one of the following:
a channel number (Channel Number) field;
an operating class (Operating Class) field;
a reserved (Reserved) field in a target beacon transmission time information header (target beacon transmission time information header, TBTT info Header) field; or
a target beacon transmission time information field type (target beacon transmission time information field type, TBTT info Field Type) field.

Optionally, when the target field includes the channel number (Channel Number) field, the first value is 0. When the target field includes the operating class (Operating Class) field, the first value is 0 or 255. When the target field includes the reserved (Reserved) field in the TBTT info header field, the first value is 0 or 1. When the target field includes the TBTT info field type field, the first value is 1, 2, or 3.

In a possible implementation, the first information element further includes a second field, and the second field includes a first subfield and a second subfield. The second field indicates a basic service set parameter corresponding to a neighbor. In addition, the first subfield included in the second field indicates whether the basic service set expects to exchange a medium access control protocol data unit (medium access control protocol data unit, MAC PDU, MPDU for short) of a management type with the neighbor through an on-channel tunneling (on-channel tunneling, OCT) mechanism, and when the target field indicates to remove the neighbor AP or disable the neighbor AP, the first subfield indicates that the basic service set expects to exchange the medium access control protocol data unit MPDU of the management type with the neighbor through the OCT mechanism. In addition, the second subfield included in the second field indicates whether the neighbor enables unsolicited probe response, and when the target field indicates to remove the neighbor AP or disable the neighbor AP, the second subfield indicates the neighbor not to enable the unsolicited probe response.

In a possible implementation, the second field is a basic service set parameter (basic service set parameter, BSS Parameter) field, the first subfield is an on-channel tunneling recommended (OCT recommended) field, and the second subfield is an unsolicited probe response active (Unsolicited Probe Response Active) subfield.

In a possible implementation, the first information element further includes a third field, and the third field indicates offset information of beacon frame sending time of the basic service set corresponding to the neighbor, and when the target field indicates to remove the neighbor AP or disable the neighbor AP, the third field indicates that the offset information of the beacon frame sending time of the basic service set corresponding to the neighbor is unknown information.

In a possible implementation, the first information element is a reduced neighbor report element (Reduced Neighbor Report element).

In a possible implementation, the radio frame is a management frame.

Optionally, the radio frame includes one or more of a beacon (Beacon) frame, a probe request (Probe Request) frame, a probe response (Probe Response) frame, an association request (Association Request) frame, a reassociation request (Reassociation Request) frame, a disassociation (Disassociation) frame, a deauthentication (Deauthentication) frame, an authentication (Authentication) frame, and the like.

It should be noted that the communication apparatus 800 may be further configured to perform the foregoing other embodiments, and implement corresponding beneficial effects. For details, refer to the descriptions in the foregoing embodiments. Details are not described herein again.

FIG. 9 is a schematic diagram of a structure of a communication apparatus 900 according to an embodiment of this application. The communication apparatus 900 includes a processor 901 and a transceiver 902.

The communication apparatus 900 may be a radio frame sending apparatus, a radio frame receiving apparatus, or a chip in a radio frame sending apparatus or a radio frame receiving apparatus.

FIG. 9 shows only main components of the communication apparatus 900. In addition to the processor 901 and the transceiver 902, the communication apparatus may further include a memory 903 and an input/output apparatus (not shown in the figure).

The processor 901 is mainly configured to: process a communication protocol and communication data, control the entire communication apparatus, execute a software program, and process data of the software program. The memory 903 is mainly configured to store the software program and the data. The transceiver 902 may include a radio frequency circuit and an antenna. The radio frequency circuit is mainly configured to: perform conversion between a baseband signal and a radio frequency signal, and process a radio frequency signal. The antenna is mainly configured to receive and send radio frequency signals in a form of an electromagnetic wave. The input/output apparatus, such as a touchscreen, a display, or a keyboard, is mainly configured to: receive data input by a user and output data to the user.

The processor 901, the transceiver 902, and the memory 903 may be connected through a communication bus.

After the communication apparatus is powered on, the processor 901 may read the software program from the memory 903, interpret and execute instructions of the software program, and process data of the software program. When data needs to be sent in a wireless manner, the processor 901 performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 901. The processor 901 converts the baseband signal into data, and processes the data.

In any one of the foregoing designs, the processor 901 may include a communication interface configured to implement a receiving function and a sending function. For example, the communication interface may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read or write code/data; or the transceiver circuit, the interface, or the interface circuit may be configured to perform signal transmission or transferring.

In any one of the foregoing designs, the processor 901 may store instructions. The instructions may be a computer program. The computer program is run on the processor 901, so that the communication apparatus 900 can perform the method described in any one of the foregoing embodiments. The computer program may be fixed in the processor 901. In this case, the processor 901 may be implemented by hardware.

In an implementation, the communication apparatus 900 may include a circuit, and the circuit may implement a sending, receiving, or communication function in any one of the foregoing embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may be manufactured using various IC process technologies, for example, a complementary metal oxide semiconductor (complementary metal oxide semiconductor CMOS), an N-type metal-oxide-semiconductor (N-type metal-oxide-semiconductor NMOS), a P-channel metal-oxide-semiconductor (positive-channel metal-oxide-semiconductor PMOS), a bipolar junction transistor (bipolar junction transistor, BJT), a bipolar CMOS (BiCMOS), silicon germanium (SiGe), and gallium arsenide (GaAs).

In another implementation, the radio frequency circuit and the antenna may be disposed independently of the processor for baseband processing. For example, in a distributed scenario, the radio frequency circuit and the antenna may be disposed remotely independent of the communication apparatus.

The communication apparatus may be an independent device or may be a part of a large device. For example, the communication apparatus may be:
(1) an independent integrated circuit IC, a chip, or a chip system or subsystem;
(2) a set of one or more ICs, where optionally, the IC set may also include a storage component configured to store data and instructions;
(3) an ASIC, for example, a modem (modem);
(4) a module that can be embedded in another device;
(5) a receiver, an intelligent terminal, a wireless device, a handheld device, a mobile unit, a vehicle-mounted device, a cloud device, an artificial intelligence device, and the like; and
(6) others.

In addition, the processor 901 may be configured to perform, for example but not limited to, baseband related processing, and the transceiver 902 may be configured to perform, for example but not limited to, radio frequency receiving and sending. The foregoing components may be separately disposed on chips that are independent of each other, or may be at least partially or totally disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to a geometric processor and a multimedia processor). Such a chip may be referred to as a system on chip (system on chip). Whether the components are separately disposed on different chips or are integrated and disposed on one or more chips usually depends on a specific requirement of a product design. A specific implementation form of the foregoing component is not limited in embodiments of the present invention.

An embodiment of this application further provides a computer-readable storage medium. The computer-readable storage medium stores computer program code. When the foregoing processor executes the computer program code, an electronic device performs the method in any one of the foregoing embodiments.

An embodiment of this application further provides a computer program product. When the computer program product runs on a computer, the computer performs the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus by using a receiver circuit, so that the apparatus performs the method in any one of the foregoing embodiments.

An embodiment of this application further provides a WLAN communication system, including a radio frame sending apparatus and a radio frame receiving apparatus. The radio frame sending apparatus and the radio frame receiving apparatus may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively a component of the processor. The processor and the storage medium may be located in an ASIC. In addition, the ASIC may be located in a core network interface device. Certainly, the processor and the storage medium may exist in the core network interface device as discrete components.

A person skilled in the art should be aware that in one or more of the foregoing examples, the functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a dedicated computer.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce better effect.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A radio frame sending method, comprising:
generating a radio frame, wherein the radio frame comprises a first information element, the first information element comprises a first field, the first information element is used to carry information about a neighbor AP, the first field indicates channel information in the information about the neighbor AP, and when a value of the first field is a first value, the first field indicates that the channel information in the information about the neighbor AP is invalid or is not notified; and
sending the radio frame.

2. A radio frame receiving method, comprising:
receiving a radio frame, wherein the radio frame comprises a first information element, the first information element comprises a first field, the first information element is used to carry information about a neighbor AP, and the first field indicates channel information in the information about the neighbor AP; and
determining the channel information in the information about the neighbor AP based on the radio frame, wherein when a value of the first field is a first value, the first field indicates that the channel information in the information about the neighbor AP is not notified.

3. The method according to claim 1 or 2, wherein the first field indicates a channel number corresponding to the channel information.

4. The method according to claim 3, wherein the first field comprises a channel number channel number field.

5. The method according to any one of claims 1 to 4, wherein the first field indicates an operating class to which the channel information belongs.

6. The method according to claim 5, wherein the first field comprises an operating class operating class field.

7. The method according to any one of claims 1 to 6, wherein
when the value of the first field is the first value, the first field further indicates to remove the neighbor AP; or
when the value of the first field is the first value, the first field further indicates to disable the neighbor AP.

8. The method according to any one of claims 1 to 7, wherein the first information element indicates information about a neighbor AP, on a non-primary link, of a soft multi-link access point device AP MLD.

9. The method according to claim 8, wherein the first information element further comprises a second field, and the second field comprises a first subfield and a second subfield;
the second field indicates a basic service set corresponding to a neighbor;
the first subfield indicates whether the basic service set expects to exchange a medium access control protocol data unit MPDU of a management type with the neighbor through an on-channel tunneling OCT mechanism, and when the first field indicates that the channel information in the information about the neighbor AP is invalid or is not notified, the first subfield indicates that the basic service set expects to exchange the medium access control protocol data unit MPDU of the management type with the neighbor through the OCT mechanism; and
the second subfield indicates whether the neighbor enables unsolicited probe response, and when the first field indicates that the channel information in the information about the neighbor AP is invalid or is not notified, the second subfield indicates the neighbor not to enable the unsolicited probe response.

10. The method according to claim 9, wherein the second field is a basic service set parameter BSS parameter field, the first subfield is an on-channel tunneling recommended OCT recommended field, and the second subfield is an unsolicited probe response active unsolicited probe response active subfield.

11. The method according to any one of claims 8 to 10, wherein the first information element further comprises a third field, the third field indicates offset information of beacon frame sending time of the basic service set corresponding to the neighbor, and when the first field indicates that the channel information in the information about the neighbor AP is invalid or is not notified, the third field indicates that the offset information of the beacon frame sending time of the basic service set corresponding to the neighbor is unknown information.

12. The method according to any one of claims 1 to 11, wherein the first information element is a reduced neighbor report element reduced neighbor report element.

13. The method according to any one of claims 1 to 12, wherein the radio frame is a management frame.

14. A radio frame sending apparatus, wherein the apparatus comprises a processing unit and a transceiver unit, and the apparatus is configured to perform the method according to any one of claims 1, and 3 to 13.

15. A radio frame receiving apparatus, wherein the apparatus comprises a processing unit and a transceiver unit, and the apparatus is configured to perform the method according to any one of claims 2 to 13.

16. A communication apparatus, comprising at least one processor coupled to a memory, wherein
the memory is configured to store a program or instructions; and
the at least one processor is configured to execute the program or the instructions, so that the apparatus implements the method according to any one of claims 1, and 3 to 13.

17. A communication apparatus, comprising at least one processor coupled to a memory, wherein
the memory is configured to store a program or instructions; and
the at least one processor is configured to execute the program or the instructions, so that the apparatus implements the method according to any one of claims 2 to 13.

18. A computer program product comprising program instructions, wherein when the program instructions are run on a computer, the computer is enabled to perform the method according to any one of claims 1 to 13.

19. A computer-readable storage medium, wherein the computer-readable storage medium stores program instructions, and when the program instructions are run, the method according to any one of claims 1 to 13 is performed.
